(19)

Europäisches Patentamt
European Patent Office
Office européen des brevets

(11) **EP 4 455 873 A1**

(12) **EUROPEAN PATENT APPLICATION**

(43) Date of publication:
**30.10.2024 Bulletin 2024/44**

(21) Application number: **23208382.4**

(22) Date of filing: **07.11.2023**

(51) International Patent Classification (IPC):
*G06F 9/48* (2006.01)

(52) Cooperative Patent Classification (CPC):
**G06F 9/4881; G06F 9/4887;** G06F 2209/484;
G06N 3/0495

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.04.2023 GR 20230100350**

(71) Applicant: **Samsung Electronics Co., Ltd.
Suwon-si, Gyeonggi-do 16677 (KR)**

(72) Inventors:
• **FAN, Hongxiang
Chertsey, KT16 0RS (GB)**
• **VENIERIS, Stylianos I.
Chertsey, KT16 0RS (GB)**
• **KOURIS, Alexandros
Chertsey, KT16 0RS (GB)**

(74) Representative: **Appleyard Lees IP LLP
15 Clare Road
Halifax HX1 2HY (GB)**

(54) **METHOD AND APPARATUS FOR SCHEDULING MULTIPLE MACHINE LEARNING MODELS**

(57)     Broadly speaking, embodiments of the present techniques relate to a method and apparatus for scheduling tasks performed by multiple machine learning, ML, models. In particular, the present techniques provide a method for scheduling the execution of inference requests that relate to a plurality of ML models, and which are all to be executed by the same apparatus or processing unit. Advantageously, the present techniques use both static and dynamic sparsity information to optimise the processing of multiple ML inference requests.

FIGURE 8

EP 4 455 873 A1

## Description

## Field

The present application generally relates to a method and apparatus for scheduling tasks performed by multiple machine learning, ML, models. In particular, the present application provides a method for sparsity-aware dynamic and static scheduling handling of inference requests that relate to a plurality of ML models, and which are all executed on the same apparatus or processing unit.

## Background

The unprecedented inference accuracy of deep neural networks, DNNs, has led to the rapidly increasing co-location of multiple DNN-powered applications. Spanning from mobile and wearable apps to cloud services, this trend leads to a significant rise in multi-DNN workloads. Simultaneously, recent advances in model compression have enabled faster and smaller models through various sparsification techniques. With inference workloads being commonly sparse, optimization opportunities have been explored, focusing on single-DNN execution. This emergence of sparsity has also influenced AI hardware, as evidenced by the sparsity support of NVIDIA GPUs via Tensor Core and Google TPU v4 via SparseCore. Nonetheless, despite its ubiquitousness across DNNs, sparsity has remained largely unexplored in multi-DNN workloads.

One of the key components while executing such multitenant workloads is the scheduler. Being responsible for deciding which task to dispatch next to the processing engine, extensive evaluation has demonstrated that the quality of scheduling determines to a large degree the attainable performance under DNN multi-tenancy, rendering the design of the scheduler a critical task. Although various multi-DNN scheduling approaches have two main limitations. Firstly, these scheduling approaches are optimized to perform well primarily on a single metric, e.g. either minimizing the latency service-level objective (SLO) violations or the average normalized turnaround time (ANTT), while excessively degrading the other. Secondly, the sparsity is largely neglected in these previous approaches, leading to sub-optimal results. More specifically, these methods do not consider fine-grained details, such as sparsity patterns and dynamicity, that are crucial for further optimizations under sparse multi-DNN workloads.

The applicant has therefore identified the need for an improved method for implementing multiple ML model workloads on a single processing unit.

## Summary

In a first approach of the present techniques, there is provided a computer-implemented method for scheduling the execution of a plurality of machine learning, ML, model inference requests (that relate to a plurality of ML models), the method comprising: receiving a new inference request in relation to one of a plurality of ML models, the new inference request comprising a maximum latency requirement; calculating an static score for the new inference request based on the maximum latency requirement, the static score indicating when the new inference request is to be scheduled; adding the new inference request into a queue of inference requests (i.e. a single queue for all requests for all ML models), wherein a position of the new inference request in the queue is based on the static score; determining whether a processing unit is currently executing an earlier inference request (i.e. an inference request received before the new inference request is received); and when the processing unit is determined to be executing an earlier inference request: calculating a dynamic score for the earlier inference request, based on a remaining execution time and a maximum latency requirement for the earlier inference request; calculating a dynamic score for the new inference request and each inference request in the queue; and scheduling execution of the earlier inference request, the new inference request and each inference request in the queue based on the dynamic scores.

An inference request is a request for data to be processed by a trained machine learning, ML, model. Here, a single device or processing unit may be able to run multiple different ML models, one at a time. For example, one of the ML models may be for classifying images, while another may be for processing speech, while another may be for natural language processing. However, each inference request may have a different priority or latency requirement associated with it and/or may take a different length of time to be executed by the relevant ML model. Thus, the present techniques enable the incoming inference requests to be scheduled so that responses to those requests can be delivered in a timely and computationally-efficient manner.

Advantageously, the present techniques comprise a static scheduler and a dynamic scheduler to schedule the execution of, by a processing unit, ML model inference requests relating to a plurality of ML models. In other words, the present techniques control a processing unit so that the processing unit performs tasks (i.e. executes inference requests) in a required order. The present techniques therefore control a hardware component of a device, i.e. a processing unit that is configured to implement ML models.

The static scheduler enables each incoming inference request to be put into an initial queue based purely on the nature of the inference requests. Thus, instead of deploying a first in first out, FIFO, system, the static scheduler orders the inference requests into the queue based on the time by which a response to the request needs to be provided. A very crude example of this is as follows: if an inference request received at time t=0 requires a response within 10 seconds, and another inference request received at time t=2 requires a response within 5 seconds, the static scheduler may schedule the inference request received at time t=2 to be executed first, because a response must be provided sooner than for the first request. The dynamic scheduler then fine-tunes the queue to take into account whether an inference request is already being executed by the processing unit. This is because the inference request currently being executed may, in some cases, take too long and cause responses to inference requests in the queue to not be delivered in time.

When execution of the new inference request or another inference request in the queue is scheduled sooner than the earlier inference request (which is currently being executed), the method may further comprise: pausing execution of the earlier inference request; and executing the new inference request or the another existing inference request in the queue. Thus, advantageously, as noted above, if the inference request currently being executed (the "earlier inference request") is going to take too long to be completed such that the maximum latency requirement of an inference request in the queue is violated, the present techniques pause the execution and start executing the next inference request in the queue. Execution of the earlier inference request is then resumed afterwards. This ensures that latency requirements for each incoming inference request are not violated.

Calculating a static score for the new inference request based on the maximum latency requirement may comprise: calculating a weighted sum of an estimated latency to complete the new inference request, and a slack time indicating a time remaining before the new inference request needs to be executed to satisfy the maximum latency requirement. Thus, the static score is based on how an estimation of how long it will take to execute the new inference request, which is based on characteristics of the ML model corresponding to the request. In particular, and as explained below, one of the characteristics of the ML model that is taken into account is the sparsity of the ML model. The sparsity (also known as a sparsity ratio) of an ML model is an indication of how many non-zero values there are in the ML model, as a fraction of the total number of values in the model. As ML models typically comprise matrix multiplications, the sparsity of the ML models may relate to the number of non-zero values in matrices of the ML models. The matrices may be weights matrices and activation matrices.

The method may further comprise determining the estimated latency, based on a sparsity pattern of the ML model that relates to the new inference request. The sparsity pattern is a pattern of the non-zero values of the ML model (e.g. in a matrix/matrices thereof) and is included in the received new inference request. That is, each inference request contains information indicating the sparsity pattern of the corresponding ML model. Generally speaking, ML models which are more sparse may be faster to execute because the zero-values reduce the number of calculations/difficult calculations to perform. However, the sparsity pattern may dictate execution time. For example, a random sparsity pattern is where random values in a matrix are zero. Although this is sparse, it may be difficult for a processor to process because random values of the matrix will need to be accessed and read. For instance, to fully utilize the sparsity in the random pattern, complex dynamic controllers are required to achieve a load-balanced execution on different hardware engines. The extra overhead of such controllers may counteract the improvement brought by skipping sparse operations, especially when the transistor-size goes down. Thus, sparsity and sparsity pattern can be used to determine how long it would take, without interruption, to execute an inference request.

The method may further comprise determining the slack time by subtracting the estimated latency from the maximum latency requirement. If the slack time for an inference request is short, this may mean the inference request needs to be executed sooner compared to an inference request with a long slack time.

Calculating a dynamic score for the earlier inference request, the new inference request and each inference request in the queue may comprise: determining a remaining time to completion for the earlier inference request; updating, using the determined remaining time, the slack time for the new inference request and each inference request in the queue; calculating, for each inference request, a time penalty indicating whether it would be better to execute that inference request instead of another inference request; and calculating the dynamic score using the determined remaining time, calculated time penalty, and updated slack time. Thus, the dynamic scheduling uses further information to dynamically fine-tune the order in which inference requests are executed. The dynamic score is updated for all the inference requests, i.e. the queued inference requests as well as the inference request being executed currently. The dynamic scheduling may be implemented whenever an executable or schedulable unit of the ML model being executed (in relation to the earlier inference request) has been completed. The executable or schedulable unit may be a block or a layer of the ML model, and may vary for different ML models, different processors or different compilers. For example, what constitutes an executable/schedulable unit may depend on whether layer fusion is applied, and if applied, the kind of layer fusion. Performing the dynamic scheduling only when such a unit has been executed to completion avoids interrupting the ML model part way through the execution, as it may be difficult to save any intermediate processing result at that stage.

Updating the slack time for the new inference request and each inference request in the queue may comprise subtracting the determined remaining time to complete the earlier inference request from the maximum latency requirement for the inference request. This provides information on whether the maximum latency requirement for a given inference request will be violated if execution of the earlier inference request continues to completion.

Calculating, for the earlier inference request, the new inference request and each inference request in the queue, a time penalty may comprise: calculating a ratio between a waiting time and an isolated execution time, wherein the waiting time is a time that the inference request has been waiting to be executed, and the isolated execution time is a time for executing the inference request without interruption; and normalising the ratio using a number of requests in the queue. The time penalty is included in the dynamic score to avoid excessively frequent pre-emptions (i.e. pausing execution of one inference request to start execution of another inference request).

Determining a remaining time to completion for the earlier inference request may comprise: calculating a sparsity-based latency for the earlier inference request using an average sparsity across layers of the ML model, and an average latency for the ML model. The sparsity-based latency is calculated using information on the sparsity of each layer of the ML model, which impacts the overall latency of the ML model.

In some cases, the average latency may be predicted based on one or more characteristics of the ML model. For example, the average latency may be predicted based on the size of the ML model, and from having observed execution times of similarly sized ML models.

Alternatively, the average latency may be predicted based on historical data, obtained from previous executions of the ML model. That is, if the ML model has been executed previously, historical execution times/latencies may be known and may be used to predict the average latency.

In a second approach of the present techniques, there is provided an apparatus for scheduling the execution of a plurality of machine learning, ML, model inference requests, the apparatus comprising: a processing unit for executing the plurality of ML inference requests; at least one processor coupled to memory, for: receiving a new inference request in relation to one of the plurality of ML models, the new inference request comprising a maximum latency requirement; calculating a static score for the new inference request based on the maximum latency requirement, the static score indicating when the new inference request is to be scheduled; and adding the new inference request into a queue of inference requests, wherein a position of the new inference request in the queue is based on the static score; and a scheduler comprising: a controller for: determining whether the processing unit is currently executing an earlier inference request; and when the processing unit is determined to be executing an earlier inference request: calculating a dynamic score for the earlier inference request, based on a remaining execution time and a maximum latency requirement for the earlier inference request; calculating a dynamic score for the new inference request and each inference request in the queue; and scheduling execution of the earlier inference request, the new inference request and each inference request in the queue based on the dynamic scores.

The features described above with respect to the first approach apply equally to the second approach and therefore, for the sake of conciseness, are not repeated.

Thus, the static scheduling may be implemented in or by software, while the dynamic scheduling may be implemented using a specific hardware component (the "scheduler").

The scheduler may further comprise: a compute unit, coupled to the controller, comprising a plurality of configurable multiplexers and demultiplexers for: performing a first task to calculate a dynamic score for the earlier inference request, the new inference request and each inference request in the queue; and performing a second task to calculate a sparsity coefficient used to calculate a sparsity-based latency. Advantageously, the scheduler is able to handle the calculation of the dynamic score and the sparsity score simply by reconfiguring the multiplexers and demultiplexers to suit each task.

The compute unit may be configured to configure the multiplexers and demultiplexers in response to instructions from the controller to perform the first task or second task.

The apparatus may further comprise a monitor, coupled to the controller, for: monitoring/calculating layer sparsity (or sparsity ratio of each layer) when the processing unit is executing inference requests for each ML model. The monitored layer sparsity may be used to predict the sparse latency for an ML model associated with an inference request, which is used to update the remaining time to completion for the earlier inference request. As explained below with reference to the Figures, the monitor comprises a zero-counting circuit.

The processing unit may be any suitable processing unit for executing ML models, such as a central processing unit (CPU), a graphics processing unit (GPU), tensor processing unit (TPU), or a neural processing unit (NPU).

The apparatus may be a constrained-resource device, but which has the minimum hardware capabilities to use a trained neural network/ML model. The apparatus may be any one of: a smartphone, tablet, laptop, computer or computing device, virtual assistant device, a vehicle, an autonomous vehicle, a robot or robotic device, a robotic assistant, image capture system or device, an augmented reality system or device, a virtual reality system or device, a gaming system, an Internet of Things device, or a smart consumer device (such as a smart fridge). It will be understood that this is a non-exhaustive and non-limiting list of example apparatuses.

In a related approach of the present techniques, there is provided a computer-readable storage medium comprising instructions which, when executed by a processor, causes the processor to carry out any of the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The method described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/o may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

**Brief description of the drawings**

Implementations of the present techniques will now be described, by way of example only, with reference to the accompanying drawings, in which:

Figure 1A is a schematic diagram illustrating sparse multi-DNN workloads;
Figure 1B is a schematic diagram showing sparsity pattern, and Figure 1C is a schematic diagram showing sparsity dynamicity;
Figure 2 shows the impact of dynamic sparsity on language models;
Figure 3 shows sparsity ratios of ResNet-50 and VGG-16;
Figure 4 are graphs showing the impact of weight sparsity pattern on the valid MAC operations on ResNet-50 and Mobilenet;
Figures 5A and 5B are schematic diagrams showing SJF scheduling without and with sparsity information, respectively, in task violation;
Figure 6 shows three example sparsity patterns applied on CNNs;
Figure 7 is a block diagram illustrating the present evaluation methodology;
Figure 8 shows an overview of the scheduling approach of the present techniques;
Figure 9 shows Algorithm 1, which is implemented by a static scheduler;
Figure 10 shows Algorithm 2, which is implemented by a dynamic scheduler;
Figure 11 shows Algorithm 3, which shows how to obtain a sparse latency prediction;

Figure 12 are diagrams showing correlation of sparsity of different layers;
Figure 13 is a schematic diagram of an architecture for the present techniques;
Figures 14A to 14D are schematic diagrams of a compute engine with adaptable connections;
Figure 15 is a flowchart of example steps for scheduling the execution of a plurality of machine learning, ML, model inference requests;
Figure 16 is a block diagram of an apparatus for scheduling the execution of a plurality of machine learning, ML, model inference requests;
Figure 17 is a schematic diagram illustrating a first example use of the present techniques;
Figure 18 is a schematic diagram illustrating a second example use of the present techniques;
Figure 19 is a schematic diagram illustrating a third example use of the present techniques;
Figure 20 is a table of results from experiments to compare scheduling approaches;
Figures 21A to 21D are graphs showing SLO violation rate and ANTT trade-off;
Figures 22A and 22B are graphs showing optimisation in multi-CNNs and multi-AttN Ns;
Figures 23A to 23D are graphs showing results of experiments to evaluate the present techniques across different latency SLOs;
Figures 24A and 24B are graphs showing results of experiments to evaluate the present techniques across different arrival rates on multi-AttNN and multi-CNN workloads;
Figure 25 shows graphs of resource usage with different optimisations; and
Figure 26 is a table showing resource overhead of the scheduler of the present techniques.

**Detailed description of the drawings**

Broadly speaking, embodiments of the present techniques relate to a method and apparatus for scheduling tasks performed by multiple machine learning, ML, models. In particular, the present techniques provide a method for scheduling the execution of inference requests that relate to a plurality of ML models, and which are all to be executed by the same apparatus or processing unit. Advantageously, the present techniques use both static and dynamic sparsity information to optimise the processing of multiple ML inference requests, also referred to as "workloads".

<u>Multi-DNN Hardware Accelerators</u>: Hardware architectures for multi-DNN workloads can be taxonomized based on their flexibility into: *1)* fixed-purpose, where the multi-DNN workloads are know a *piori*; and *2)* workload-agnostic accelerators. *Fixed-purpose designs* opt to instantiate multiple heterogeneous compute engines that operate in parallel and apply design-time optimizations for the given multi-DNN workload. Prominent optimizations include highly customized compute engines and static scheduling, both tailored to the target workloads, or co-design of the set of models and the hardware. *Workload-agnostic designs* have either augmented existing accelerators with the necessary hardware components to support preemptive time-multiplexing, or proposed highly flexible architectures that enable the spatial co-location of multiple DNNs through dynamic resource allocation. Finally, another line of work has investigated different trade-offs of multi-DNN hardware architectures through design space exploration and interference-aware performance modeling. The present techniques adopt preemptive time-multiplexing architectures, which constitute the most widespread deployed design. This allows the present scheduling technique to improve performance with minimal hardware modifications, leading to wider generality and impact.

Multi-DNN Schedulers: Schedulers for multi-DNN workloads have so far adopted two main approaches: *1)* temporal and *2)* spatio-temporal scheduling. In the first approach, a single model occupies the compute engine of the target accelerator at each time instant. The optimizations have focused on preemptive scheduling schemes, inter-DNN pipelining that co-schedules compute- and memory-bound DNNs for higher utilization of both the computational and memory resources, and memory-aware scheduling to reduce memory swapping between models. In the second approach, multiple models are processed in parallel by different parts of the accelerator. In this case, the scheduler decides both which DNNs to dispatch and the resource allocation among them, statically or dynamically.

Despite the progress, existing methods are constrained by two main limitations. First, by neglecting the presence of model sparsity, they leave untapped optimization opportunities. Second, each scheduler tends to work well on a single performance metric, *e.g.* either SLO violation rate or ANTT, while excessively penalizing the other. Instead, through its sparsity-aware, fine-grained scheduling algorithm and the low-cost hardware enhancement, the present techniques push the boundaries of the attainable performance, while consistently yielding a better trade-off between SLO violations and ANTT.

Multi-DNN Benchmarks: So far, progress has been made primarily towards benchmark suites for single-DNN execution, with prominent efforts such as AI Benchmark for mobile devices and variants of *MLPerf.* XRBench is a domain-specific benchmark suite of multi-DNN workloads for AR/VR applications. Nonetheless, there is still a lack of standardization in the evaluation of more generic multi-DNN systems, and their performance under sparse DNNs. The present applicant aims to pave the way towards bridging this gap through an open-source benchmark and evaluation infrastructure that is explained herein.

The present applicant has systematically investigated the optimization opportunities in sparse multi-DNN workloads. To achieve this, a public sparse multi-DNN workload benchmark is proposed, which includes convolutional neural networks (CNNs) for vision tasks and attention-based neural networks (AttNNs) for natural language processing (NLP) applications. These benchmark models are sparsified using dynamic and static approaches with different patterns in order to emulate real-world scenarios.

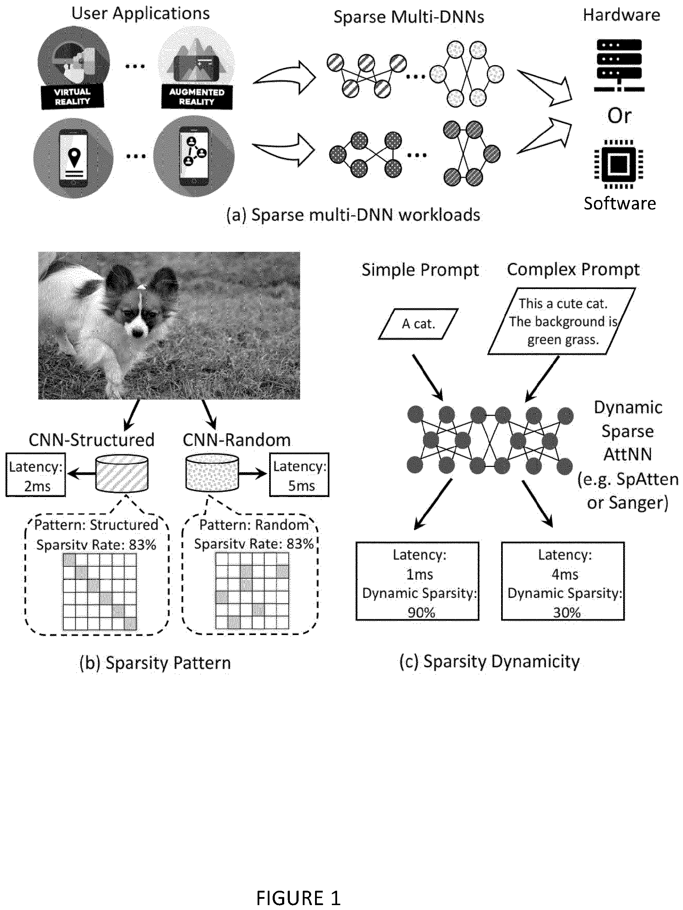

Figure 1A is a schematic diagram illustrating the concept of sparse multi-DNN workloads. Here, it can be seen that a plurality of user applications, such as virtual reality or mobile-based applications, may make use of ML models. The ML models may be executed on the same device, and may use hardware or software to do so. The sparsity of the ML models may vary. Two sparsity properties that lead to significant inter-model (across models) and intra-model (across input samples) dynamicity at runtime have been identified.

Figure 1B is a schematic diagram showing sparsity pattern, which refers to the pattern of non-zero masks used while sparsifying weights. Figure 1B presents an example of CNNs with the same sparsity rate but different sparsity patterns, yielding varied latencies (2ms compared to 5ms in this example) due to the count of effective operations.

Figure 1C is a schematic diagram showing sparsity dynamicity, which comprises the input-dependent sparsity in activations that leads to latency variability across input samples.

Figure 1C illustrates an NLP (natural language processing) example, where short and simple prompts with less information may lead to higher dynamic sparsity and lower latency compared to long and complex prompts at runtime. This category of dynamic sparsity is usually generated by either dynamic pruning approaches or certain operations, such as rectified linear units (ReLUs), that regularly produce zero values.

These two sparsity properties lead to the dynamic behavior of sparse DNNs during execution, which affects the scheduling design while optimizing SLO violation rate and ANTT.

Based on the identified sources of sparsity dynamicity and the proposed benchmark, the present techniques provide *Dysta,* a novel bi-level dynamic and static scheduler that optimizes for both ANTT and violation rate. At the first software-based level, *Dysta* utilizes static information, such as sparsity patterns and average latency, to obtain the initial task priorities before the execution of each task. At the second level, the present techniques provide a lightweight hardware scheduler that adaptively refines the scheduling by monitoring the runtime information, such as the sample-specific dynamic sparsity, for further optimization. Overall, the present techniques provide:

- A public benchmark of sparse multi-DNN workloads that contains a wide range of DNNs with various forms of sparsity, including both dynamic and static sparsity and diverse sparsity patterns.
- A bi-level dynamic and static scheduling framework, named *Dysta,* which utilizes both static and dynamic sparsity information to optimize the processing of sparse multi-DNN workloads.

- A low-cost hardware design of the *Dysta* scheduler and an efficient sparse latency predictor. Several hardware optimizations are proposed to reduce the resource consumption of the scheduler, making its hardware overhead negligible compared with the overall accelerator.

To assess the effectiveness of the present techniques, a comprehensive evaluation on the new benchmark was conducted. As explained below, the present techniques achieve significant improvements in both ANTT and violation rate over the state-of-the-art multi-DNN schedulers, demonstrating *Dysta's* advantages and the value of the new benchmark for evaluating schedulers on sparse multi-DNN workloads.

Multi-DNN Workloads and Scheduling: The scheduling strategy constitutes a core component of multi-DNN accelerators that directly affects the attainable performance of the system. In the context of multi-DNN workloads with the layer-wise processing manner, the scheduler determines which layer of which model should be processed next and is the main driver of preemption and resource allocation decisions. Depending on the characteristics of the target application, scheduling can be either static or dynamic. Static scheduling is suitable for fixed-purpose multi-DNN systems, such as robots and autonomous vehicles, where the target set of DNNs and their performance requirements are known a *priori*. In contrast, dynamic scheduling is a more flexible approach, where dynamic schedulers allow new inference tasks to be processed and resources to be repurposed based on the completed and already running DNNs

A key commonality behind existing multi-DNN dynamic scheduling algorithms is their strong reliance on the assumption that DNN inference constitutes a predictable workload, *i.e.* it comprises a static computation graph for all inputs. Based on this assumption, execution time estimates, obtained through an offline profiling stage, are then employed to guide runtime scheduling decisions. Nonetheless, the static-workload assumption leads to overly conservative schedules and, in turn, to inefficient utilization of the hardware accelerator. As described below, sparsity constitutes an increasingly ubiquitous form of dynamicity in modern and upcoming DNNs that shifts the status-quo fixed DNN workload towards a dynamic, input-dependent workload, with the sparsity level changing in a per-sample manner. With multi-DNN workloads putting unprecedented pressure on computational demands, there is an emerging need for novel sparsity-aware solutions that extract the maximum performance from the underlying accelerator and enable the scalable processing of multiple DNNs.

Sparse DNN Accelerators: Stemming from sparsity-inducing training, activation functions or pruning methods, sparsity is widely observed across different types of models. At the hardware front, a series of works have proposed sparse DNN accelerators that manage to obtain speedup and efficiency gains through zero-skipping mechanisms and efficient sparse-storage schemes. Besides the static weight sparsity that is known a *priori,* advanced sparse accelerators also support dynamically skipping ineffectual computations based on the input-dependent sparsity of activations, providing additional performance improvements over conventional accelerators.

Motivation: In the context of multi-DNN workloads, previous literature has so far overlooked the various types of sparsity that are observed across models. The present techniques identify two primary properties of sparsity, namely 1) sparsity dynamicity and 2) sparsity pattern, and their effects in scheduling sparse multi-DNN workloads are explained herein.

Sparsity Dynamicity: As explained above with reference to Figure 1C, sparsity dynamicity comprises the input-dependent sparsity in activations that leads to latency variability across input samples Sparsity dynamicity is widely observed across different families of DNNs, including both attention-based neural networks (AttNNs) and convolutional neural networks (CNNs). The two main sources of dynamicity are *i)* dynamic pruning methods and *ii)* operations that regularly generate zero values.

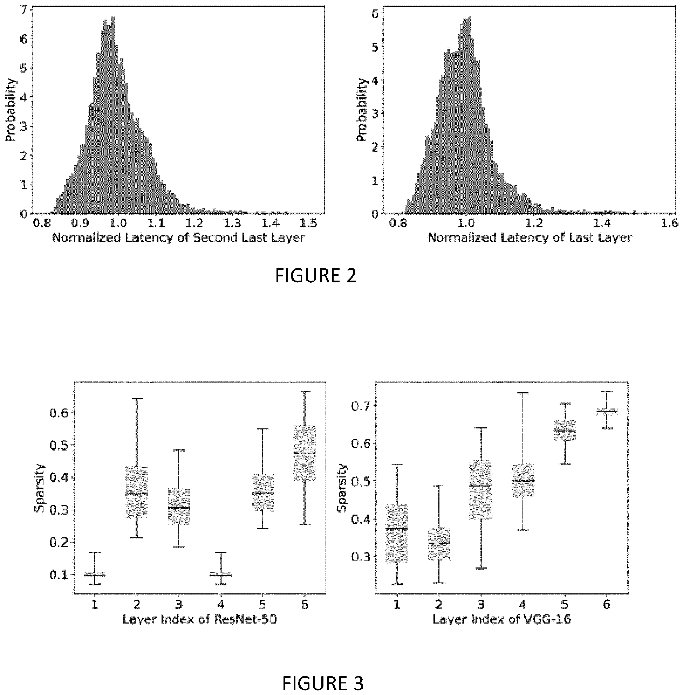

For AttNNs, the most common form of sparsity dynamicity comes from dynamic pruning approaches. By focusing on weak connections between different tokens in the attention matrix, various pruning techniques have been proposed to exploit the attention sparsity for acceleration. To demonstrate the dynamic behavior introduced by the attention sparsity, the per-layer latency of *BERT* is profiled on the accelerator introduced in Sanger. The sparse *BERT* is iterated over the SQUAD dataset. For better visualization, the distribution is normalised by the average latency. Figure 2 shows the impact of dynamic sparsity on language models. As shown in Figure 2, the normalized latency varies from 0.6 to 1.8, resulting in significant dynamic behavior during runtime.

For CNNs, the focus here is on the ReLU activation function as an example of an operation that regularly generates zeros at runtime and study its dynamic behavior. Although others have briefly discussed the impact of ReLU on runtime dynamicity in CNNs, they did not consider out-of-distribution or less informative inputs that may cause large sparsity variances, such as images taken by users in dark or poorly illuminated environments. The present applicant has conducted a more comprehensive analysis by including low-light images from the ExDark and DarkFace datasets to emulate real scenarios. The activation sparsity is profiled of the last six layers in *ResNet-50* and *GoogLeNet.* Figure 3 shows sparsity ratios of ResNet-50 and VGG-16. As shown in Figure 3, the sparsity ratios of most layers range from 10% to 45%, indicating that a large variance is introduced when considering out-of-distribution or less informative images. To investigate the sparsity of the network instead of individual layers, the network sparsity is calculated by averaging individual layer sparsities across the whole network. It was found that the relative range of network sparsity can reach up to 28.4%, depending on the model.

Sparsity Pattern. As noted above with reference to Figure 1B, sparsity pattern refers to the mask type used when sparsifying DNNs. Mainstream sparsity patterns include point-wise random, block-wise structured and channel-wise sparsification. The support for different sparsity patterns largely depends on the underlying hardware design. For instance, the Sparse Tensor Core introduced in the NVIDIA Ampere architecture supports the block-wise N:M pattern, while other customized accelerators have better performance for the point-wise random pattern. Although previous work attempts to leverage sparsity information when scheduling multi-DNN workloads, they only rely on the overall sparsity ratio, without considering the sparsity patterns and their relationship with the target hardware.

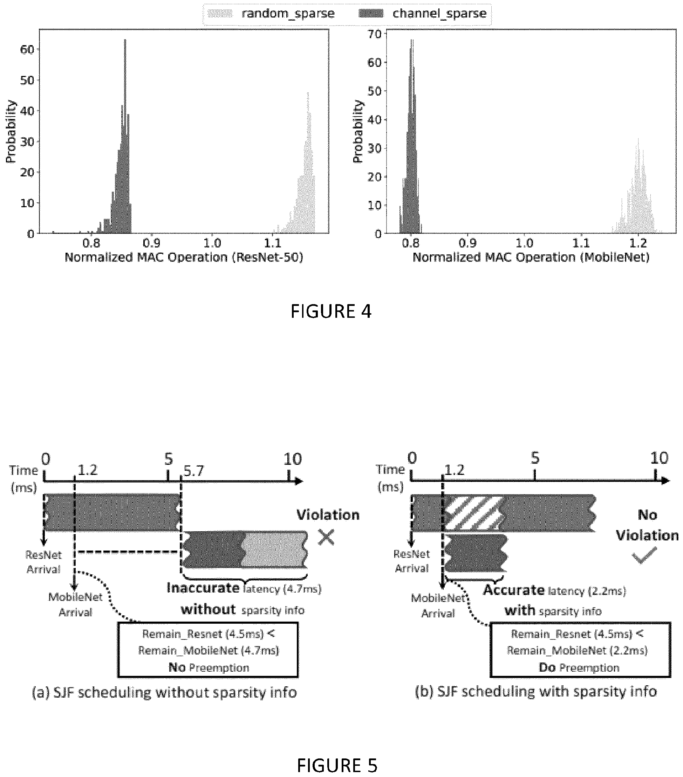

To investigate the effect of sparsity patterns, the amount of valid MAC operations introduced by point-wise random and channel-wise sparsities are profiled, respectively. For both patterns, the same overall sparsity ratio is kept with identical input images for profiling. Figure 4 are graphs showing the impact of weight sparsity pattern on the valid MAC operations on ResNet-50 and MobileNet. Figure 4 presents the distribution of normalized MAC operations on ResNet-50 and MobileNet with sparsity ratios of 95% and 80%, respectively. Notably, different sparsity patterns may introduce up to 40% difference in normalized valid MACs, despite the same sparsity ratio.

Optimization Opportunities. Based on the analysis, two key optimization opportunities for the scheduler of sparse multi-DNN workloads are identified.

Opportunity One: Dynamicity- & Pattern-Aware. Based on the profiling results explained above, sparsity may lead to significant dynamic behavior at runtime, which affects the optimality of schedulers when targeting sparse multi-DNN workloads. Figures 5A and 5B are schematic diagrams showing an example of Shortest-Job First (SJF) scheduling, to illustrate the importance of capturing sparsity information for multi-DNN workloads. Specifically Figure 5A shows the impact on task violation of SJF scheduling without using sparsity information and Figure 5B shows the impact on task violation of SJF scheduling when using sparsity information with using in task violation. When exploiting fine-grained information, such as dynamic sparsity ratio or sparsity pattern, the scheduler can make a more informed preemption decision based on accurate latency estimation, avoiding the violation of the second request. Based on this observation, the present techniques utilise sparsity dynamicity and pattern information to improve sparse multi-DNN scheduling.

Opportunity Two: SLO- & ANTT-Optimized. Although previous approaches have attempted to optimize multi-DNN scheduling, it is observed that they only perform well on a single metric, *e.g.* either the latency SLO violation rate or ANTT, while sacrificing the performance of the other. For instance, compared with the traditional SJF scheduler, current SOTA approaches can only improve ANTT under the condition of excessively higher SLO violations. The reasons are that they either *i)* are not deadline-aware or *ii)* do not consider the optimization of the violation rate or ANTT while including deadlines. Thus, the present techniques address these drawbacks by co-optimizing both SLO violation rate and ANTT.

Sparse Multi-DNN Benchmark

Benchmark Models. One of the limitations in previous multi-DNN research is the absence of publicly accessible benchmarks for conducting fair comparisons. To address this issue, the present applicant proposes a public benchmark for sparse multi-DNN scheduling. The present benchmark is designed to accommodate a diverse collection of sparsified CNNs and AttNNs.

The present benchmark is devised by considering sparse multi-DNN workloads in three setups: data center, mobile phones and AR/VR wearables. The present benchmark comprises six tasks spanning three distinct applications: visual perception, personal assistant, and hand tracking. The tasks include object detection, image classification, machine translation, question & answering, hand tracking and gesture recognition. For vision tasks, four popular CNN models are adopted, namely SSD, ResNet-50, VGG-16, and MobileNet. For AttNNs, the present benchmark includes three commonly used language models: BERT, BART, and GPT-2. In terms of datasets, ImageNet, ExDark, DarkFace, and COCO are adopted for training and evaluation on vision tasks, while GLUE and SQUAD are used for language tasks.

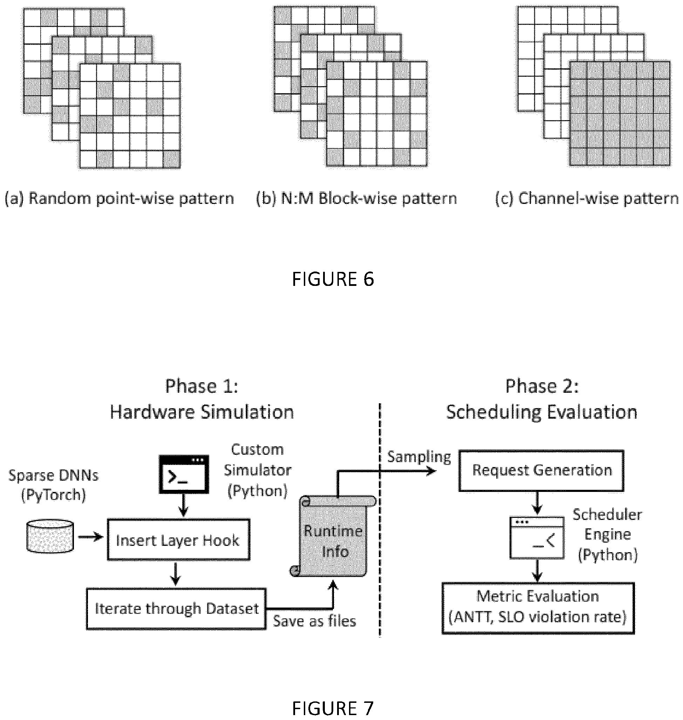

Model Sparsification: In order to study the impact of sparsity patterns, three different pruning methods for CNNs are adopted: random point-wise, N:M block-wise and channel-wise pruning. The generated sparsity patterns of each pruning approach are shown in Figure 6. The pre-trained CNNs are obtained from PyTorch, and the target pruning methods are applied using sparsification recipes provided by SparseML and SparseZoo. The sparsity rate is exposed as a tunable parameter.

For AttNNs, the dynamic pruning approach introduced in Sanger is adopted to study the effect of sparsity dynamicity. The adopted method performs pruning dynamically via binary thresholding based on a lightweight prediction of the attention matrix. Following their open-source code, the threshold was set as 0.2 for BART, and 0.002 for BERT and GPT2 to maintain the original accuracy of each model.

Evaluation Methodology

Methodology Overview. Figure 7 is a block diagram illustrating the present evaluation methodology, which comprises hardware simulation and scheduling evaluation phases. During the Hardware Simulation phase, the Python-based hardware simulator is inserted into sparse models using the Hook function provided by PyTorch. This enables the generation of runtime information such as per-layer latency and sparsity ratio of each model for the target sparse hardware. The runtime information is obtained for each input and model pair by processing the whole dataset with each sparse model. The runtime information is then saved as files for later use. In the *Scheduling Evaluation* phase, multiple task requests are generated by sampling from sparse models summarized above. The Scheduler Engine is then deployed to handle incoming requests according to the designated scheduling algorithm. The runtime information obtained in the hardware simulation phase is used by the Scheduler Engine to simulate the execution of the target hardware. After the completion of all jobs, different metrics are evaluated, including both ANTT and violation rate based on the user-specified latency SLO.

Hardware Simulator. To simulate sparse AttNNs, Sanger is selected as the target hardware accelerator with the support of load-balanced computation for attention sparsity. The Sanger open-source simulator is adopted in the present evaluation. For CNNs, although there are various sparse accelerators, only a few of them open-source their design or simulator. The most promising third-party simulators are *SparseLoop* and *STONNE.* However, these frameworks suffer from either prohibitively slow evaluation when actual data are used or limited *PyTorch* support, rendering them unsuitable for meeting our needs. As a result, a custom Python-based simulator was developed for sparse CNN evaluation. In this endeavor, *Eyeriss-V2* is selected as the target CNN accelerator for two reasons. First, it supports both weight and activation sparsity. Second, several third-party implementations are available for replicating the *Eyeriss-V2* hardware design. This allowed use of these references to validate the correctness of the present custom simulator.

### Dynamic and Static Scheduler

Framework Overview. As demonstrated above in the discussion on optimisation opportunities, the dynamicity and pattern of sparsity introduce variations in runtime behavior that can significantly impact the optimality of scheduling. To alleviate this, a bi-level scheduling method is introduced, which combines static and dynamic scheduling while leveraging information about both sparsity dynamicity and pattern.

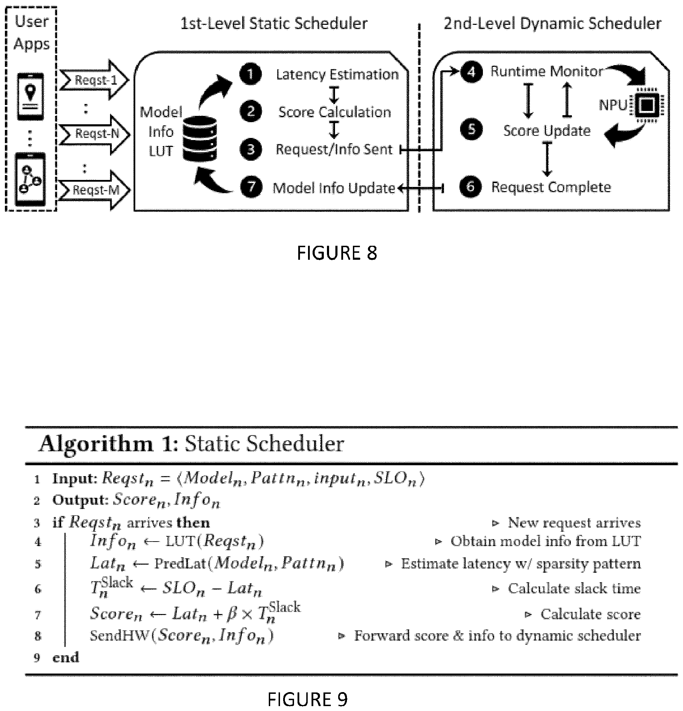

Figure 8 shows an overview of the scheduling approach of the present techniques. The present bi-level scheduler comprises a static and a dynamic component, implemented at the software and hardware levels, respectively. At the first level, the static component assigns the incoming requests (Reqst-1 ... Reqst-N... Reqst-M) with initial static scores to determine the processing order, taking into account the sparsity patterns of the DNN workloads. At this step, the static scheduler also populates a lookup table (LUT) with each request's model information. This per-request information includes *i)* the model's sparsity pattern, *ii)* the average sparsity ratio across all layers, and *iii)* the average latency on the target hardware. The average sparsity and latency information is obtained by profiling representative requests offline. At the second level, the dynamic component interacts with the target hardware accelerator (neural processing unit (NPU) in Figure 8), to monitor the input-dependent, runtime sparsity of the workload. The obtained information is then used to update the task scores and adjust their processing order dynamically. The static and dynamic components of the present scheduler, also referred to herein as "Dysta" are explained in more detail below.

### Dysta Scheduling Algorithm

Static Scheduler. Figure 9 shows Algorithm 1, which is implemented by a static scheduler. Algorithm 1 describes the proposed software-based static scheduler. Upon the arrival of a new request $Reqst_n$, defined as a tuple < $Model_n$, $Pattn_n$, $input_n$, $SL0_n$ >, the static scheduler assigns an initial static score $Score_n$ that determines its processing order before knowing any runtime information.

Thus, the present techniques provide a computer-implemented method for scheduling the execution of a plurality of machine learning, ML, model inference requests, the method comprising: receiving a new inference request in relation to one of the plurality of ML models, the new inference request comprising a maximum latency requirement. This is shown in line 1 of Algorithm 1, and on the left hand side of Figure 8.

The method then comprises calculating a static score for the new inference request based on the maximum latency requirement, the static score indicating when the new inference request is to be scheduled. The process to calculate this initial static score is shown in Algorithm 1.

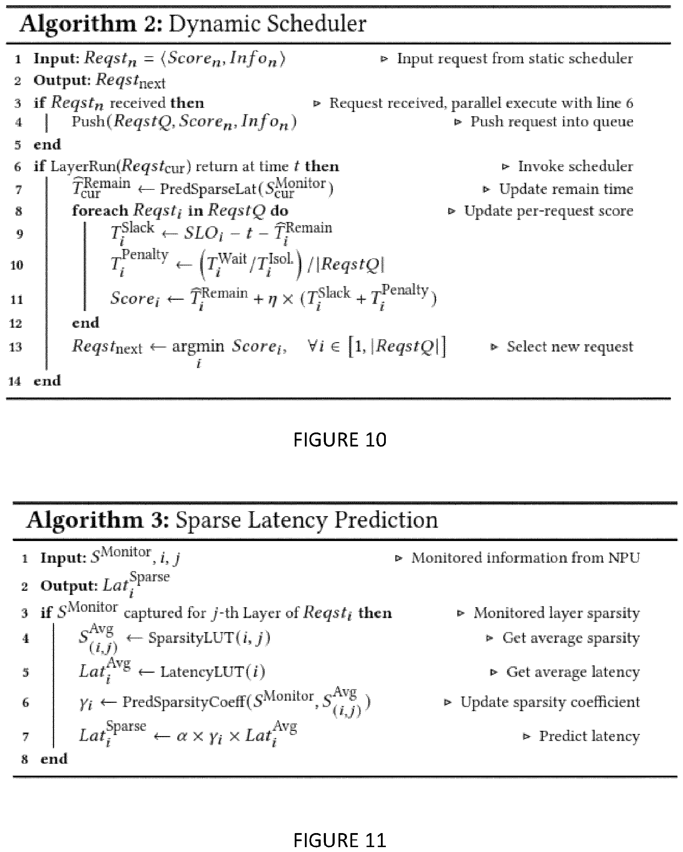

The method then comprises adding the new inference request into a queue of inference requests, wherein a position of the new inference request in the queue is based on the initial static score. This can be seen in steps 3 and 4 in Figure 8, and in line 4 of Algorithm 2 in Figure 10.

To meet the multi-objective requirements of multi-DNN systems and maintain a balance between ANTT and SLO violation rate, the initial score of the $n$-th request is expressed as the weighted sum of two factors (line 7): the estimated latency $Lat_n$ (line 5), and the slack time $T_n^{\text{Slack}}$ that is determined based on the request's latency SLO (line 6). Thus, calculating an initial static score for the new inference request based on the maximum latency requirement may comprise: calculating a weighted sum of an estimated latency to complete the new inference request, and a slack time indicating a time remaining before the new inference request needs to be executed to satisfy the maximum latency requirement. In this way, the initial static score is based on how an estimation of how long it will take to execute the new inference request, which is based on characteristics of the ML model corresponding to the request. In particular, and as explained below, one of the characteristics of the ML model that is taken into account is the sparsity of the ML model.

Each of the two factors serves a different purpose. First, by incorporating the estimated latency in the score, shorter jobs are encouraged to finish earlier. As such, the static scheduler yields schedules that primarily improve the ANTT metric. Second, by integrating the slack into the score, the static scheduler prioritizes jobs with tight deadlines to be dispatched sooner. Thus, the latency SLO violations are kept to a minimum. Overall, to balance the optimization between ANTT and SLO violation rate, the formulation is parameterised by means of hyperparameter $\beta$ (line 7), which allows tunable weighting of the two factors.

Moreover, to capture the effect of sparsity pattern, latency is estimated separately for each model-pattern pair. Thus, the method may further comprise determining the estimated latency, based on a sparsity pattern of the ML model that relates to the new inference request. The average latency is used to estimate $Lat_n$, which may be obtained by collecting latency information either from actual executed requests or from using the performance model on a number of representative requests. A LUT is used to store the average latency and sparsity pattern pair of each model. As such, the estimated latency can be quickly obtained by accessing the LUT's entry for the given model-pattern pair. Finally, the calculated score and the request information are passed to the hardware-based dynamic scheduler for execution.

Dynamic Scheduler. Figure 10 shows Algorithm 2, which is implemented by a dynamic scheduler. Algorithm 2 presents the hardware-based dynamic scheduler. The dynamic scheduler uses a queue *ReqstQ* to store all the incoming requests forwarded by the static scheduler (where the forwarding is shown in step 3 in Figure 8). The dynamic scheduling assumes that the execution is performed in a per-layer or per-layer-block manner, which is a common setting in commercial AI hardware and existing research literature. Thus, whenever the execution of one layer or layer block completes, the dynamic scheduler is invoked to update the estimated latency and determine the next running request. As shown on line 7, the updated latency estimate, $\hat{T}_i^{\text{Remain}}$, is obtained based on the monitored sparsity information $S_{\text{cur}}^{\text{Monitor}}$ using an efficient sparse latency predictor, PredSparseLat(·), detailed below. To determine the next request to process, the dynamic scheduler updates the score of each *Reqst$_i$* from *ReqstQ,* and the next running request is selected as the one with the lowest score.

Thus the method for scheduling the execution of a plurality of ML inference requests comprises: determining whether a processing unit (e.g. NPU in Figure 8) is currently executing an earlier inference request. When the processing unit is determined to be executing an earlier inference request, the method comprises: calculating a dynamic score for the earlier inference request, based on a remaining execution time and a maximum latency requirement for the earlier inference request; calculating a dynamic score for the new inference request and each inference request in the queue; and scheduling execution of the earlier inference request, the new inference request and each inference request in the queue based on the dynamic scores.

The score calculated by the dynamic scheduler comprises three terms (line 9): *1)* remaining time $\hat{T}_i^{\text{Remain}}$, *2)* slack time $T_i^{\text{Slack}}$, and *3)* penalty $T_i^{\text{Penalty}}$. Thus, calculating a dynamic score for the earlier inference request, the new inference request and each inference request in the queue may comprise: determining a remaining time to completion for the earlier inference request; updating, using the determined remaining time, the slack time for the new inference request and each inference request in the queue; calculating a time penalty indicating whether it would be better to execute this inference request instead of another inference request; and calculating the dynamic score using the determined remaining time, calculated time penalty, and updated slack time.

Updating the slack time $T_i^{\text{Slack}}$ for each inference request in the queue may comprise subtracting the determined remaining time $\hat{T}_i^{\text{Remain}}$ to complete the earlier inference request from the maximum latency requirement for the inference request, as shown in line 9 of Algorithm 2. This provides information on whether the maximum latency requirement for a given inference request will be violated if execution of the earlier inference request continues to completion.

The first two terms ($\hat{T}_i^{\text{Remain}}$ and $T_i^{\text{Slack}}$) aim to improve ANTT and violation rate, respectively, similarly to the static scheduler. However, a key characteristic of the dynamic component is that it estimates latency $\hat{T}_i^{\text{Remain}}$ with higher accuracy by relying on the actual monitored sparsity information and the sparse latency predictor. This approach enables alleviation of the limitations demonstrated in the optimisation opportunity discussion above, leading to better-informed scheduling decisions. To avoid excessively frequent preemptions, the penalty term (line 10) is introduced. This term is defined as the ratio between the waiting time $T_i^{\text{Wait}}$ and the isolated execution time $T_i^{\text{Isol.}}$, normalized by the number of requests in queue *ReqstQ*. Thus, calculating, for each inference request, a time penalty may comprise: calculating a ratio between a waiting time and an isolated execution time, wherein the waiting time is a time that the inference request has been waiting to be executed, and the isolated execution time is a time for executing the inference request without interruption; and normalising the ratio using a number of requests in the queue. A lower penalty indicates a request waiting for a shorter time, which encourages the scheduler to keep the nearest-executed request executing. A hyperparameter $\eta$ is used to balance these terms in the score, allowing for a tunable trade-off between ANTT and SLO violation rate.

Hardware Design: In this section, the hardware design of *Dysta's* dynamic scheduler is explained (i.e. the right hand side of Figure 8). First, the design of the sparse latency estimator is explained, which constitutes a core driver behind the scheduler's decisions. Then, the microarchitecture, key components and hardware optimizations of the scheduler's design are explained.

Sparse Latency Predictor: Designing the latency predictor for the sparse multi-DNN scheduler requires consideration of two metrics: accuracy and hardware overhead. As illustrated in the optimisation opportunity discussion above, accurate latency estimation is crucial for improving the scheduling of sparse multi-DNN workloads. However, it is important to also take into account the hardware overhead of the latency predictor. To this end, although several existing advanced learning-based approaches can be used for this task, the overhead of these methods is prohibitively costly for the present scheduler operating at the layer granularity.

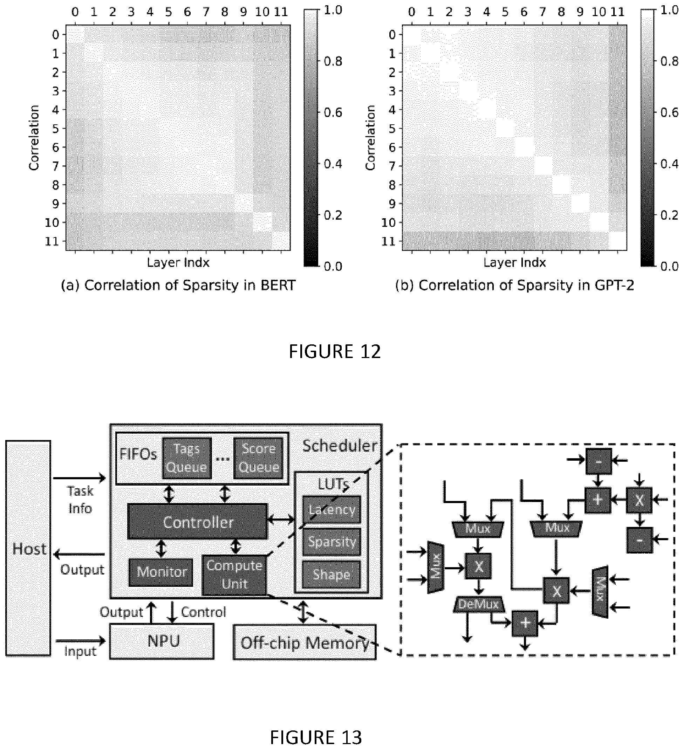

To design an accurate and efficient latency predictor for the sparse multi-DNN scheduler, two key problems need to be addressed: *1)* identifying what sparsity information needs to be captured during runtime, and *2)* determining the best algorithm for latency prediction. To this end, the layer sparsity of two popular AttNN models, *BERT* and *GPT-2,* are profiled on the SQUAD and GLUE datasets, respectively, and their Pearson product-moment correlation is analysed. Figure 12 are diagrams showing correlation of sparsity of different layers. The results in Figure 12 indicate that the sparsities of different layers are highly linearly correlated in both models. This observation motivates monitoring of the layer sparsity at runtime and adopting a linear model for sparse latency prediction.

Figure 11 shows Algorithm 3, which shows how to obtain a sparse latency prediction. A hardware monitor is deployed to calculate the layer sparsity $S^{\text{Monitor}}$ for the current running model (line 1). The sparse latency predictor retrieves the average layer sparsity $S_{(i,j)}^{\text{Avg}}$ and latency $Lat_i^{\text{Avg}}$ from the sparsity and latency LUTs, respectively, based on the model-pattern pair information (lines 4 & 5). The average latency stored in the latency LUT is received from the static scheduler, while the sparsity LUT is constructed by either collecting information from executed requests or obtaining information from model providers. Whenever the hardware monitor returns the layer sparsity, the sparsity coefficient $\gamma_i$ is calculated (line 6), representing the linear rate between monitored and average layer sparsities. The latency is estimated as $\alpha \times \gamma_i \times Lat_i^{\text{Avg}}$, where parameter $\alpha$ reflects how effectively sparsity can deliver real latency reduction. The value of $\alpha$ depends on the underlying hardware and needs to be set per pattern. As the accelerators targeted by the present techniques support both activation and weight sparsity, this is set as $\alpha = 1$.

Thus, determining a remaining time $\hat{T}_i^{\text{Remain}}$ to completion for the earlier inference request may comprise: calculating a sparsity-based latency for the earlier inference request using an average sparsity across layers of the ML model, and an average latency for the ML model. The sparsity-based latency is calculated using information on the sparsity of each layer of the ML model, which impacts the overall latency of the ML model.

In some cases, the average latency may be predicted based on one or more characteristics of the ML model. For example, the average latency may be predicted based on the size of the ML model, and from having observed execution times of similarly sized ML models.

Alternatively, the average latency may be predicted based on historical data, obtained from previous executions of the ML model. That is, if the ML model has been executed previously, historical execution times/latencies may be known and may be used to predict the average latency.

To determine the sparsity coefficient y, three different approaches are considered, namely *average-all, last-N,* and *last-one.* The *average-all* method takes the average of the monitored layer sparsity across all the already executed layers to estimate the dynamic layer sparsity. This estimated dynamic layer sparsity is then divided by the average sparsity obtained from the sparsity LUT to generate the sparsity coefficient. Similarly, *last-N* and *last*-one methods follow the same procedure as *average-all,* but estimate the dynamic layer sparsity from the monitored layer sparsity of the last N layers and the last executed layer, respectively. These three approaches are evaluated in the sparse latency predictor and the estimated latency is compaered with the measured sparsity obtained from the hardware simulator. It is observed that both *average-all* and *last-one* perform similarly, and outperform *last-N.* As such, the *last-one* method is used, as it requires less amount of computation and memory for the averaging operation.

Hardware Scheduler Design

Design Overview: Figure 13 is a schematic diagram of an architecture for the present techniques. Specifically, Figure 13 shows an overview of the microarchitecture of the present hardware scheduler. The module is situated between the NPU and the host CPU, and is connected to the off-chip memory, if the intermediate results are transferred to it. It is important to emphasise that the insertion point of the present scheduler is dependent on the design of the hardware accelerator. As no restrictions have been imposed on the accelerator design, Figure 13 is merely used as an example to demonstrate the use of the present hardware scheduler, without loss of generality.

The hardware scheduler consists of a controller, a runtime monitor, a compute unit and multiple FIFOs and LUTs. The FIFOs are deployed to track the per-request information, such as request tags, scores and latency SLOs. The depth of FIFOs depends on the maximal number of requests that can be handled by the hardware accelerator. The FIFO depths are set as configurable parameters in the present scheduler. The latency, sparsity and shape information for each model-pattern pair are cached in three LUTs, which are accessed during the calculation of the sparsity coefficient and score. The controller is designed to perform the following tasks: *1)* receive requests from the static scheduler and forward them into the tag and score FIFOs, *2)* calculate the sparsity coefficient of the currently running request based on the monitored runtime information, *3)* update the score of each request, and *4)* determine the request with the lowest score to be dispatched next. The calculation of the sparsity coefficient and the score are both implemented in the shared reconfigurable compute unit, detailed below. Finally, the monitor captures the layer sparsity through a zero-counting circuit.

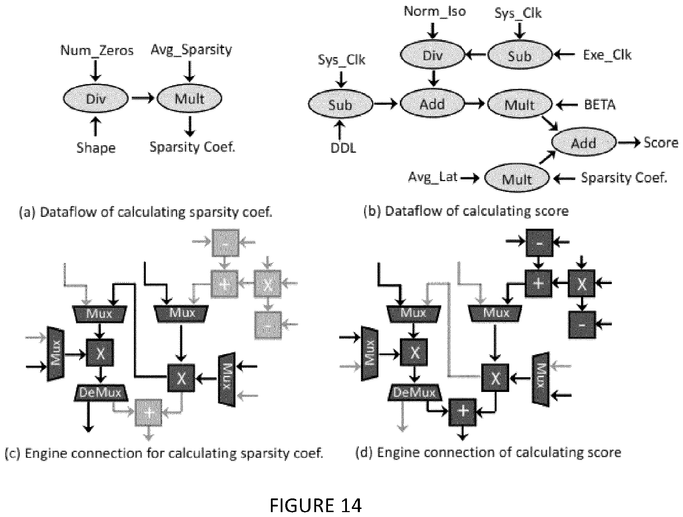

Reconfigurable Compute Unit: Figures 14A to 14D are schematic diagrams of a compute engine with adaptable connections. To reduce the resource and area overheads of the hardware scheduler, a reconfigurable compute unit is proposed that can be shared for the calculation of both the sparsity coefficient and the request score. As outlined in Algorithms 2 and 3, the computation comprises, first, calculating the sparsity coefficient $\gamma$ and, then, updating the score of each request based on the estimated sparse latency. These computations are depicted as computational flows in Figures 14A and 14B, respectively. As these computations are performed at different stages of the scheduling process, a reconfigurable compute unit that can be shared by both is designed.

The hardware design of the present reconfigurable compute unit is presented on the right-hand side of Figure 13. The last two multipliers are equipped with several multiplexers (Mux) and a de-multiplexer (DeMux) at the input and output ports. This enables different dataflows to be implemented by reconfiguring the select signals. During the computation of the sparsity coefficient, as the shape is a constant, the division (Div) can be implemented as a multiplication by pre-computing the reciprocal of the shape offline. Therefore, the compute unit is configured with the last two multipliers enabled to calculate the sparsity coefficient, as shown in Figure 14C. In contrast, during the computation of scores, all the arithmetic units are enabled for latency prediction and score aggregation, as shown in Figure 14D. The division of normalized isolation time shown in Figure 14B is implemented as a multiplication by pre-computing the reciprocal offline. To further reduce resource consumption, half-precision floating-point (FP16) is adopted as the data type of the hardware scheduler.

Thus, the present scheduler comprises: a static scheduler, and a hardware scheduler. The hardware scheduler comprise: a controller for: determining whether a processing unit (e.g. NPU) is currently executing an earlier inference request; and when the processing unit is determined to be executing an earlier inference request: calculating a dynamic score for the earlier inference request, based on a remaining execution time and a maximum latency requirement for the earlier inference request; calculating a dynamic score for the new inference request and each inference request in the queue; and scheduling execution of the earlier inference request, the new inference request and each inference request in the queue based on the dynamic scores.

The hardware scheduler may comprise: a compute unit, coupled to the controller, comprising a plurality of configurable multiplexers and demultiplexers for: performing a first task to calculate a dynamic score for the earlier inference request, the new inference request and each inference request in the queue; and performing a second task to calculate a sparsity coefficient used to calculate a sparsity-based latency. Advantageously, the scheduler is able to handle the calculation of the dynamic score and the sparsity score simply by reconfiguring the multiplexers and demultiplexers to suit each task.

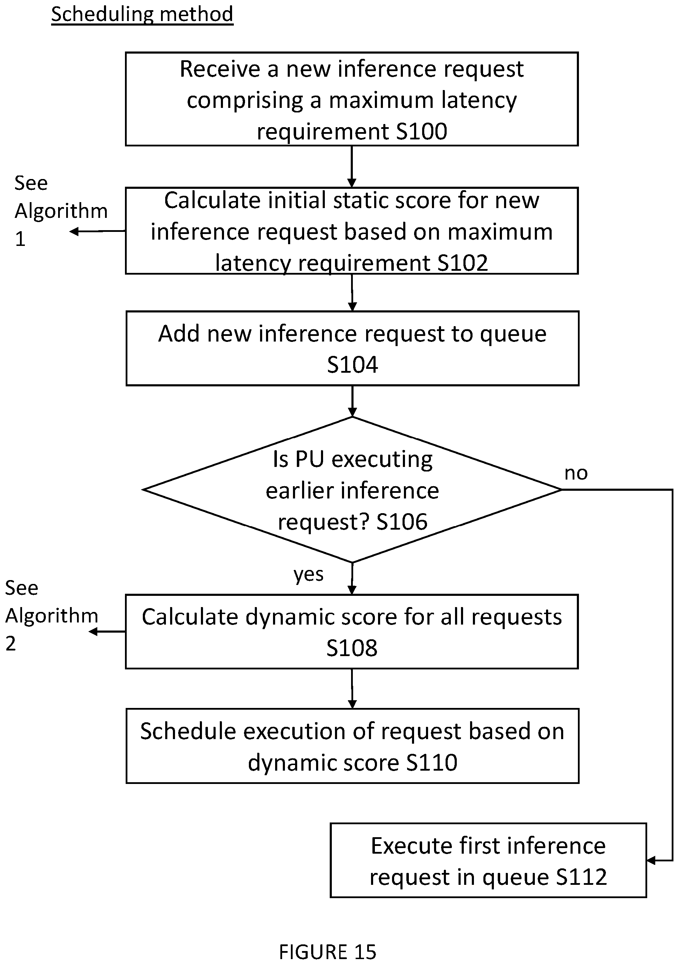

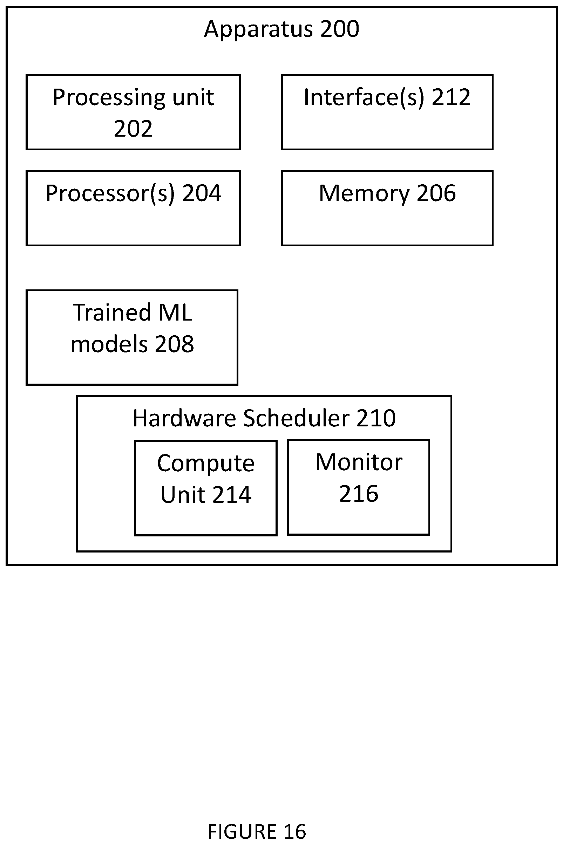

Before explaining the experiments used to evaluate the present techniques, the overall method and apparatus is summarised, by reference to Figures 15 and 16.

Figure 15 is a flowchart of example steps for scheduling the execution of a plurality of machine learning, ML, model inference requests. The method comprises: receiving a new inference request in relation to one of the plurality of ML models, the new inference request comprising a maximum latency requirement (step S100).

The method comprises calculating a static score for the new inference request based on the maximum latency requirement, the static score indicating when the new inference request is to be scheduled (step S102). The process to calculate the static score is described in detail above with reference to Algorithm 1. The method comprises: adding the new inference request into a queue of inference requests, wherein a position of the new inference request in the queue is based on the static score (step S104). This may involve sending the new inference request to the hardware scheduler, as shown in step 3 of Figure 8. Thus, the queue may be maintained by the hardware scheduler.

The method comprises determining whether a processing unit is currently executing an earlier inference request (step S106). In cases where the processing unit is not currently executing an earlier inference request, the method may comprise executing the first inference request in the queue (step S112). This may be the inference request received at step S100, or another inference request.

In cases where the processing unit is determined to be currently executing an earlier inference request, the method comprises: calculating a dynamic score for the earlier inference request, based on a remaining execution time and a maximum latency requirement for the earlier inference request; and calculating a dynamic score for the new inference request and each inference request in the queue (step S108). The process to calculate the dynamic score for all of the requests (queued or being executed) is described in detail above with reference to Algorithms 2 and 3. The method then comprises: scheduling execution of the earlier inference request, the new inference request and each inference request in the queue based on the dynamic scores (step S110).

Figure 16 is a block diagram of an apparatus 200 for scheduling the execution of a plurality of machine learning, ML, model inference requests. The apparatus 200 may be a constrained-resource device, but which has the minimum hardware capabilities to use a trained neural network/ML model. The apparatus may be any one of: a smartphone, tablet, laptop, computer or computing device, virtual assistant device, a vehicle, an autonomous vehicle, a robot or robotic device, a robotic assistant, image capture system or device, an augmented reality system or device, a virtual reality system or device, a gaming system, an Internet of Things device, or a smart consumer device (such as a smart fridge). It will be understood that this is a non-exhaustive and non-limiting list of example apparatuses.

The apparatus 200 stores a plurality of trained ML models 208. The trained ML models may be for different processing tasks and may have different architectures. For example, the trained ML models may be CNNs or AttNNs.

The apparatus 200 comprises: a processing unit 202 for executing the plurality of ML inference requests. The processing unit 202 may be any suitable processing unit for executing ML models, such as a central processing unit (CPU), a graphics processing unit (GPU), tensor processing unit (TPU), or a neural processing unit (NPU).

The apparatus 200 comprises at least one processor 204 coupled to memory 206. The at least one processor 204 may comprise one or more of: a microprocessor, a microcontroller, and an integrated circuit. The memory 206 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example.

The at least one processor 204 performs steps S100 to S104 in Figure 15. That is, the at least one processor 204 implements the static scheduling of the present techniques.

The apparatus 200 comprises a hardware scheduler 210. The hardware scheduler 210 implements the dynamic scheduling of the present techniques, as shown in steps S106 to S112 in Figure 15.

The hardware scheduler 210 comprises a controller (see Figure 13) for: determining whether the processing unit is currently executing an earlier inference request. When the processing unit is determined to be executing an earlier inference request, the controller is for: calculating a dynamic score for the earlier inference request, based on a remaining execution time and a maximum latency requirement for the earlier inference request; calculating a dynamic score for the new inference request and each inference request in the queue; and scheduling execution of the earlier inference request, the new inference request and each inference request in the queue based on the dynamic scores.

The hardware scheduler 210 may further comprise: a compute unit 214 (see Figures 13 and 14A-D), coupled to the controller. The compute unit 214 may comprise a plurality of configurable multiplexers and demultiplexers for: performing a first task to calculate a dynamic score for the earlier inference request, the new inference request and each inference request in the queue; and performing a second task to calculate a sparsity coefficient used to calculate a sparsity-based latency.

The compute unit 214 may be configured configure the multiplexers and demultiplexers in response to instructions from the controller to perform the first task or second task.

The hardware scheduler 210 may further comprise a monitor 216, coupled to the controller, for: monitoring layer sparsity (or sparsity ratio of each layer) while the processing unit executes inference requests for each ML model. The monitored layer sparsity may be used to predict the sparce latency (Algorithm 3) for an ML model associated with an inference request, which is used to update the remaining time to completion for the earlier inference request (Algorithm 2). As explained above, the monitor comprises a zero-counting circuit.

The apparatus 200 may comprise at least one interface 212 for receiving inference requests and/or for providing responses to inference requests.

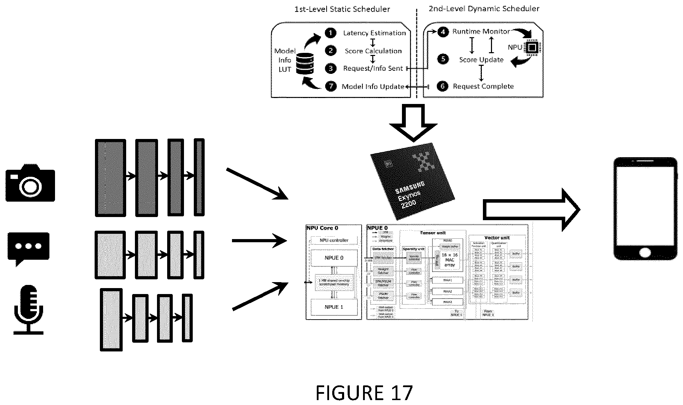

Figure 17 is a schematic diagram illustrating a first example use of the present techniques. This example shows how multiple DNN-powered applications may be run on smartphones. The unprecedented accuracy of DNNs has led to the rapidly increasing deployment of DNN-powered applications. There is an emerging need for handling multi-DNN workloads on smartphones, spanning from vision to natural language applications. The proposed bi-level scheduler enables the concurrent execution of multiple DNN-powered apps on smartphones with high efficiency and performance. It also explicitly exploits NPUs with sparse processing capabilities, such as the mobile Exynos NPU with its zero-skipping mechanism, leading to higher performance and hardware utilization. In Figure 17, it can be seen that a smartphone may run a number of applications, such as a camera app, a chat app, and an audio app, which use ML models. For example, a camera app may use ML models to optimise the capture of images and/or videos, while an audio app may use ML models to enhance speech or remove background noise in audio signals.

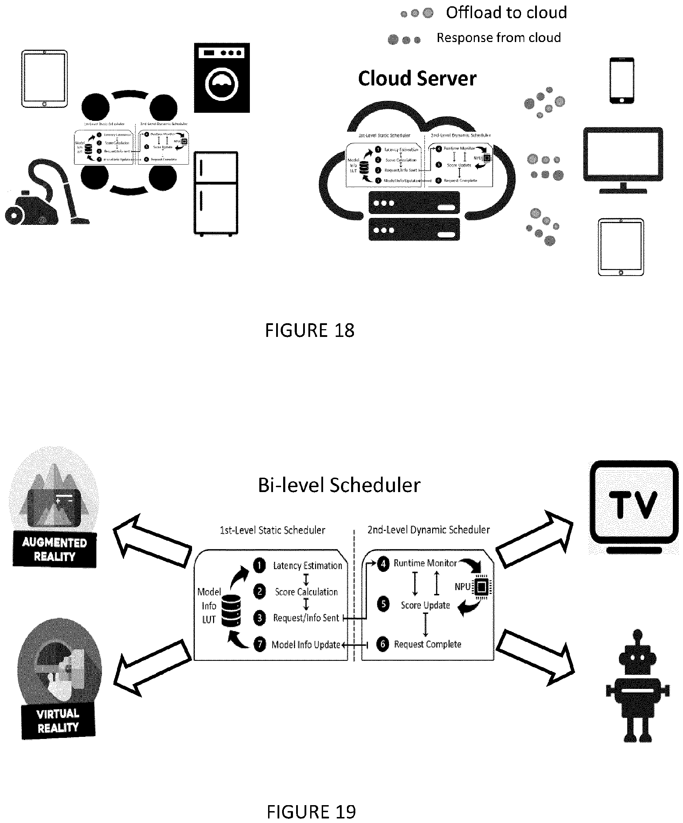

Figure 18 is a schematic diagram illustrating a second example use of the present techniques. This example shows how the present techniques may be used to serve AI workloads in edge-based hubs (left hand side) or cloud-based hubs (right hand side). Multi-DNNs are the emerging workload in edge-based hubs or cloud-based servers, where multiple devices or users raise requests concurrently. An instance of an edge-based hub is the Samsung SmartThings Station which is used in smart-home and smart-office environments. The proposed design is modularized and parametrized. As such, it can be seamlessly deployed and scaled to meet the area, performance and energy requirements of different edge-based hubs and could-based servers. The present bi-level scheduler has strong robustness across multi-DNN workloads with different request traffics, which can be used to efficiently improve hardware performance across fluctuating diurnal loads.

Figure 19 is a schematic diagram illustrating a third example use of the present techniques. This example shows how the present techniques may be used to implement concurrent DNNs in digital TVs (DTVs), home robots and AR/VR sets. The latest edge devices, such as DTVs, AR/VR sets and mobile robots in the home setting, typically have to run multiple models for concurrent tasks, such as video enhancement and speech commands spotting in DTVs, obstacle detection and navigation in robot vacuum cleaners, and hand tracking and depth estimation in AR/VR sets. The present scheduler yields faster processing, better scalability in terms of number of parallel models and higher energy efficiency and can be used to enable energy-efficient and low-latency processing of multi-DNN workloads on edge devices.

The evaluation experiments are now described.

Experimental Setup

Software Implementation: The present evaluation and simulation infrastructure are developed using Python, as described above. The pre-trained benchmark models are obtained from TorchVision provided by PyTorch (v3.8.12) and the Transformers library released by HuggingFace. The sparsification process described above is implemented using SparseML. The Sanger simulator is adopted for sparse AttNNs experiments and a custom simulator of Eyeriss-V2 for sparse CNNs. The custom Eyeriss-V2 simulator is developed based on the validated performance model provided by a third-party code, to ensure its correctness. The multi-AttNN workloads target the real scenarios on mobile phones with a mix of machine translation and question & answering. The Multi-CNNs constitute a mix of visual perception and hand tracking, which are common workloads in AR/VR, robotics and data centers.

Hardware Implementation: The present hardware scheduler is implemented using SystemVerilog. The scheduler is clocked at 200 MHz. To make a consistent evaluation as Eyeriss-V2 design1.1 on FPGA, Xilinx Vivado 2019.1 is used for synthesis and implementation. To support large CNN models such as ResNet-50 and VGG-16, the global buffer of input activations is increased in Eyeriss-V2 from 1.5KB to 2.5KB. The other hardware configurations of both Sanger and Eyeriss-V2 remain consistent with their original papers.

Baselines: Comparisons are made with status-quo scheduling approaches, including *i)* First-Come First-Served (FCFS) and *ii)* Shortest-Job First (SJF), and the state-of-the-art multi-DNN schedulers: *iii)* PREMA, *iv)* Planaria, and *v)* SDRM3. To improve the performance of PREMA at the beginning of the scheduling, the selection criterion (line 9 of the PREMA scheduling algorithm) is modified to $Token_i \geq Threshold,$ as opposed to the original condition of $Token_i > Threshold.$ For Planaria, the resource requirement estimate (line 40 in Algorithm 1 in Planaria) is set to 1 for all tasks, since the present target accelerators are time-shared, without spatial co-location of multiple tasks. For SDRM3, MapScore (Eq. (5) in SDRM3) is set as the weighted sum of *Urgency* and *Fairness.* The weight *Pref* is set to 1, since only one accelerator is targeted at a time, and parameter $\alpha$ is tuned following SDRM3's optimization methodology.

Metrics: To assess the performance of different scheduling approaches, three metrics are used: average normalized turnaround time (ANTT), SLO violation rate and system throughput (STP). Specifically, for a multi-DNN workload consisting of $N$ models, ANTT is defined as $\frac{1}{N}\sum_{n=1}^{N}\frac{T_i^{\text{Multi}}}{T_i^{\text{Isol.}}},$ where $T_i^{\text{Multi}}$ is the measured execution time under multi-tenancy and $T_i^{\text{Isol.}}$ is the uninterrupted isolated execution time of the target task. The SLO violation rate is calculated as $\dfrac{N^{\text{viol}}}{N}$ where $N^{\text{viol}}$ represents the number of violated tasks under certain latency SLOs and request arrival rates. Following the experimental setup of PREMA, the SLO is set as

$T_i^{\text{Isol.}} \times M_{\text{slo}}^{\text{lat}}$ where $M_{\text{slo}}^{\text{lat}}$ refers to the SLO multiplier used to control the stringency of the latency constraints. The total number of requests in each workload is set as 1000 to ensure the reliability of the results. For each metric, evaluation uses five random seeds and the average is reported.

End-to-End Performance Comparison: The performance of different scheduling approaches is evaluated in two multi-tenant scenarios: multi-AttNNs and multi-CNNs. To generate the multi-AttNN and multi-CNN workloads, random samples are taken from the AttNNs and CNNs mentioned above in the benchmarking discussion, respectively. Following the *MLPerf* standard, the request arrival times are generated for each workload using a Poisson distribution. Given the computational capacity of *Sanger* and *Eyeriss-V2,* the arrival rate of the multi-AttNN workload is set as 30 samples/s and the multi-CNN workload is set as 3 samples/s. The latency SLO multiplier is configured as 10 × for both multi-AttNN and multi-CNN workloads. It is noted that the present approach achieves similar performance gains under workloads with different arrival rates and latency SLO multipliers.

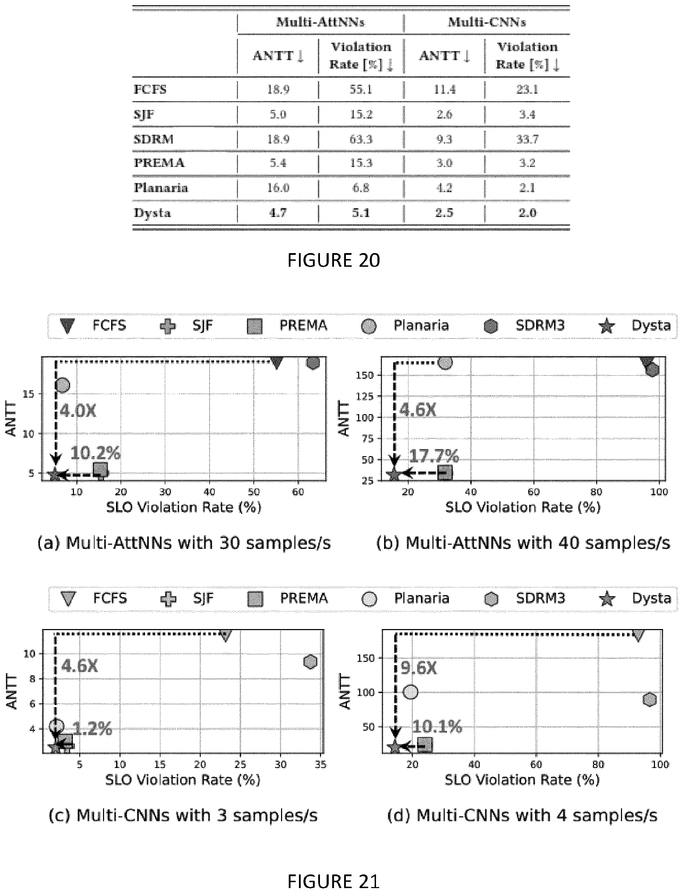

Figure 20 is a table of results from experiments to compare scheduling approaches. As seen from Figure 20, the present scheduler (Dysta) outperforms all the previous approaches. In contrast to previous approaches, such as *PREMA* and *Planaria,* which only perform well on either violation rate or ANTT, the present scheduler excels in both metrics compared to the traditional heuristic *SJF* method. Comparing with the SOTA *Planaria,* the present scheduler achieves a reduction of 1.7% in the violation rate while decreasing ANTT by 3.4 × in multi-AttNN workloads. The present scheduler also reduces the ANTT by nearly 2 × in multi-CNNs compared with SJF while achieving similar violation rates.

Figures 21A to 21D are graphs showing SLO violation rate and ANTT trade-off. To visualize the improved trade-off achieved by Dysta, Figures 21A to 21D present 2D plots with ANTT on the y-axis and violation rate on the x-axis. The multi-AttNN workloads are evaluated at arrival rates of 30 and 40 samples/s, while the multi-CNN workloads are evaluated at arrival rates of 3 and 4 samples/s. The SLO configuration remains the same as in Figure 20. As observed from Figures 21A to 21D, the present scheduler is located at the lower left corner with the lowest violation rate and ANTT compared with other approaches, demonstrating its effectiveness in achieving an improved trade-off and better matching the multi-objective nature of multi-DNN systems.

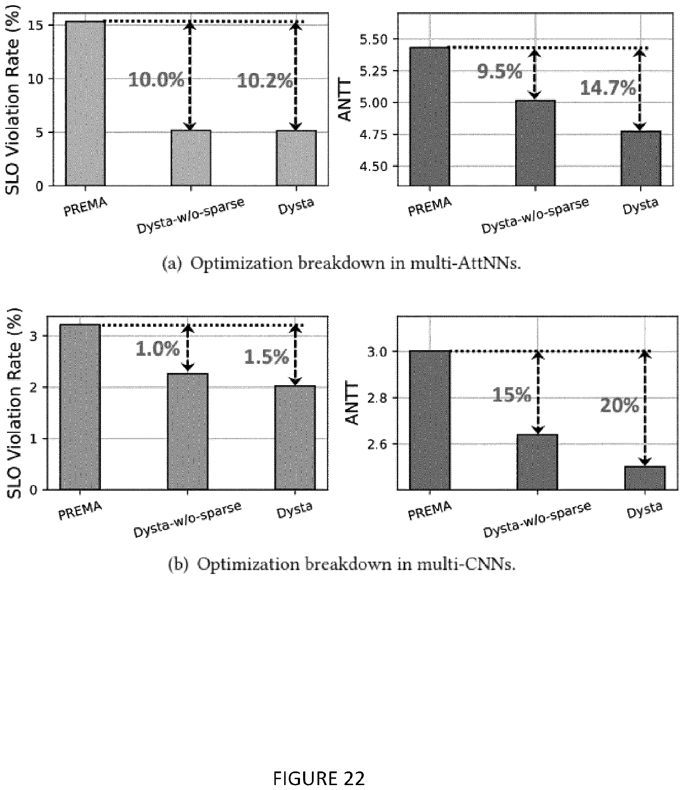

Optimization Breakdown: To investigate the gain introduced by each proposed technique, optimization breakdowns are provided for both multi-AttNN and multi-CNN workloads, as shown in Figures 22A and 22B. Two baselines are evaluated to compare with Dysta: *1) PREMA,* a representative SOTA multi-DNN scheduling approach, and *2) Dysta-wlo-sparse,* an ablated variant of *Dysta* with dynamic hardware scheduler and sparsity-aware support disabled. By comparing *Dysta-wlo-sparse* against *PREMA,* a clear reduction in the violation rate and ANTT can be observed on both multi-AttNN and multi-CNN workloads, demonstrating the effectiveness of the present static score-based scheduling approach. Comparing *Dysta* to *Dysta-wlo-sparse,* a clear ANTT drop can be seen on both multi-AttNN and multi-CNN workloads by adopting the dynamic hardware component. In general, the dynamic hardware scheduler is observed to have a lesser impact on the violation rate than ANTT. This can be attributed to the significant correlation between task violations and latency SLO objectives. With loose SLO objectives, the latency estimated by the static scheduler is accurate enough to prevent task violation. Consequently, no further significant improvement is achieved by the dynamic hardware component.

Robustness Evaluation: To validate the robustness of the present scheduling approach, experiments were conducted using workloads generated with different hyperparameters, *i.e.* latency SLOs and arrival rates.

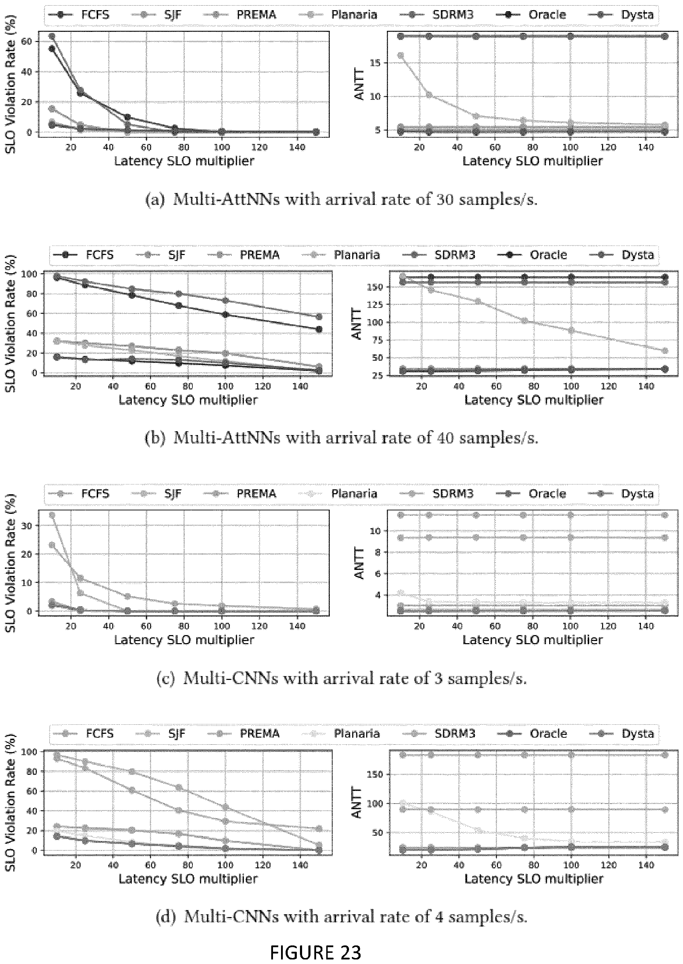

Robustness across Different Latency SLOs: To evaluate the performance with different SLO requirements, the latency SLO multiplier is varied between 10 × and 150 × for both multi-AttNN and multi-CNN workloads. Two arrival rates are evaluated for each workload, which are configured as 30 and 40 samples/s for multi-AttNNs and 3 and 4 samples/s for multi-CNNs. Figures 23A to 23D are graphs showing results of experiments to evaluate the present techniques across different latency SLOs. Specifically, Figures 23A to 23D show the results of the violation rate and ANTT. As the latency SLO multiplier increases, both ANTT and SLO violations exhibit a declining trend due to the relaxed latency constraint. In multi-AttNN workloads, achieves the lowest violation rate and ANTT across different latency SLOs. This trend can be observed in both arrival rates (30 and 40 samples/s), demonstrating the advantage and robustness of the present approach against different levels of latency SLO requirements. Dysta also closely matches the performance of the Oracle scheduler in ANTT and violation rate. The same conclusion can be drawn for multi-CNNs, where Dysta consistently outperforms other approaches in both violation rate and ANTT across different latency SLO multipliers. This also demonstrates the robustness of the present approach under different families of models.

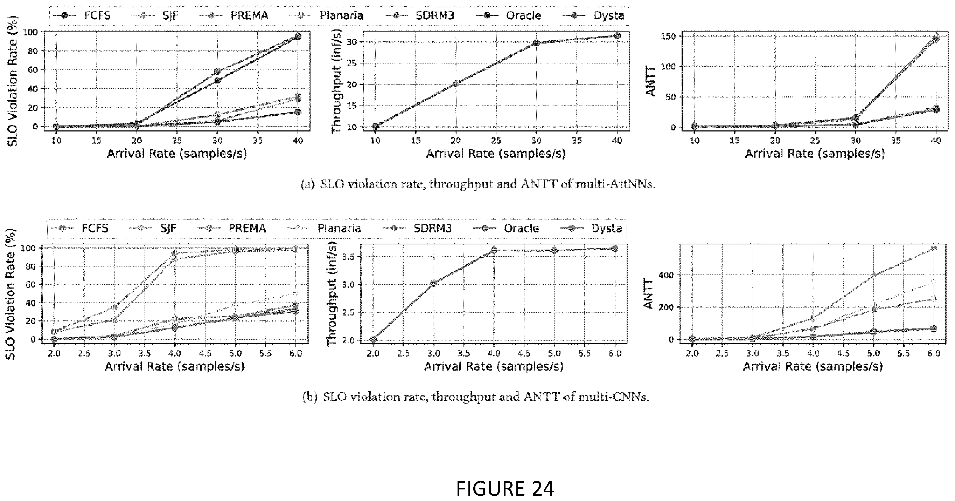

Robustness across Different Arrival Rates: To evaluate the performance across traffic levels, the request arrival rate is varied between 10 ~ 40 samples/s for multi-AttNNs, and 2 ~ 6 samples/s for multi-CNNs, based on the computational capacity of the target hardware. To eliminate the impact of latency SLOs, $M^{\text{lat}}_{\text{slo}}$ is set to 10 × for both workloads. Figures 24A and 24B are graphs showing results of experiments to evaluate the present techniques across different arrival rates on multi-AttNN and multi-CNN workloads. Specifically, Figures 24A and 24B show the violation rate, system throughput and ANTT of different scheduling methods across different arrival rates. All three metrics exhibit an upward trend as the arrival rate increases. The change in throughput remains the same across different scheduling methods as it is dependent on the computational capacity of the hardware. Under different arrival rates, Dysta keeps outperforming other schedulers in both violation rate and ANTT, with close performance to Oracle. The gain becomes more prominent while increasing the arrival rate, demonstrating the robustness of the present method under heavier traffic.

Hardware Overhead: To evaluate the hardware overhead introduced by the proposed hardware scheduler, its resource utilization is compared against *Eyeriss-V2.* An open-source third-party hardware design is adopted to get the resource consumption of *Eyeriss-V2.* Both the hardware scheduler and accelerator are clocked at 200 MHz, targeting the Xilinx Zynq ZU7EV FPGA board.

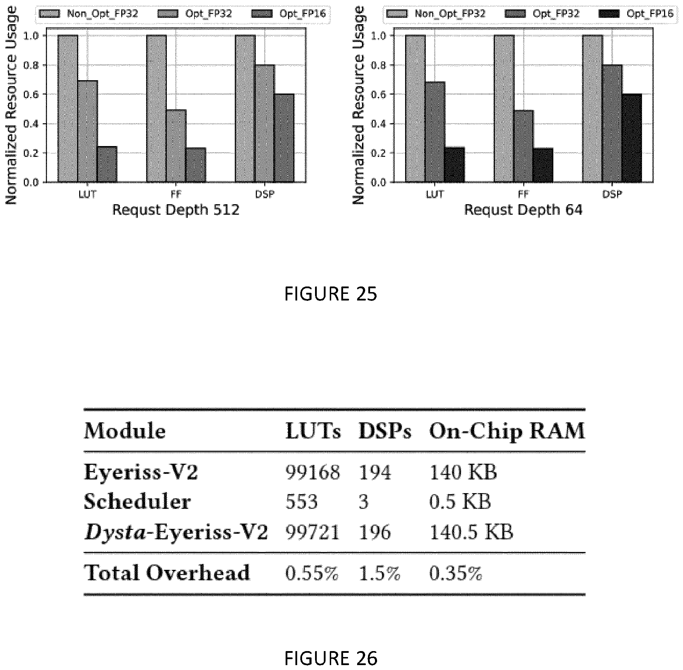

To demonstrate the resource reduction provided by the reconfigurable compute unit and FP16 representation, the resource usage of three hardware designs with different optimizations applied is investiaged: *1) Non_Opt FP32,* which refers to the native implementation with separate compute units and 32-bit floating-point (FP32), *2) Opt_FP32* that adopts reconfigurable compute unit, and *3) Opt_FP16* with both reconfigurable compute unit and FP16 applied. To validate the effectiveness of the present optimizations across different FIFO depths, two designs are instantiated with FIFO depth of 512 and 64, respectively. Figure 25 shows graphs of resource usage with different optimisations. As can be seen in Figure 25, the reconfigurable compute unit brings a significant reduction in LUT, register (Flip-Flops (FF)) and DSP resources. These reductions come from the savings of the compute unit, logic and memory required for calculating the sparsity coefficient. By comparing *Opt_FP16* with *Opt_FP32,* significant reductions in all three types of resources can also be seen. For both optimizations, a similar reduction trend can be observed for both FIFO depths, demonstrating the effectiveness of the present optimizations across different FIFO depths.

Figure 26 is a table showing resource overhead of the scheduler of the present techniques. The table presents the hardware overhead of the present approach compared to *Eyeriss-V2.* Given the computational capacity of *Eyeriss-V2,* the FIFO depth is set to 64. The present hardware scheduler consumes a minimal amount of 0.55% of LUTs, 1.5% of DSPs and 0.35% of on-chip RAM, which is negligible compared to the overall resource usage. The significant gains achieved in ANTT and violation rate with such a low hardware cost demonstrates the effectiveness of the present approach.

Thus, the increasing demand for running multiple DNNs in parallel and the prevalence of sparsity across different DNN models have led to the emergence of sparse multi-DNN workloads. By identifying the optimization opportunities in sparse multi-DNN workloads, the present techniques provide a novel bi-level dynamic and static scheduler that utilizes sparsity dynamicity and pattern information for better scheduling. Coupled with an efficient hardware scheduler and sparse latency predictor, the present scheduler achieves up to 10% fewer violations and nearly 4 × lower average normalized turnaround time compared to the state-of-the-art methods, while incurring negligible hardware cost.

References:

- BERT - Jacob Devlin, Ming-Wei Chang, Kenton Lee, and Kristina Toutanova. 2019. BERT: Pre-training of Deep Bidirectional Transformers for Language Understanding. In ACL.
- Sanger - Liqiang Lu, Yicheng Jin, Hangrui Bi, Zizhang Luo, Peng Li, Tao Wang, and Yun Liang. 2021. Sanger: A Co-Design Framework for Enabling Sparse Attention Using Reconfigurable Architecture. In 54th Annual IEEE/ACM International Symposium on Microarchitecture (MICRO).
- SQUAD - Pranav Rajpurkar, Jian Zhang, Konstantin Lopyrev, and Percy Liang. 2016. SQuAD: 100,000+ Questions for Machine Comprehension of Text. In Conference on Empirical Methods in Natural Language Processing (EMNLP). 2383-2392.
- ResNet-50 - Kaiming He, Xiangyu Zhang, Shaoqing Ren, and Jian Sun. 2016. Deep Residual Learning for Image Recognition. In IEEE Conference on Computer Vision and Pattern Recognition (CVPR).
- VGG-16 - Karen Simonyan and Andrew Zisserman. 2015. Very Deep Convolutional Networks for Large-Scale Image Recognition. In International Conference on Learning Representations (ICLR).
- MobileNet - Andrew G Howard, Menglong Zhu, Bo Chen, Dmitry Kalenichenko, Weijun Wang, Tobias Weyand, Marco Andreetto, and Hartwig Adam. 2017. MobileNets: Efficient Convolutional Neural Networks for Mobile Vision Applications. arXiv (2017).
- BART - Mike Lewis, Yinhan Liu, Naman Goyal, Marjan Ghazvininejad, Abdelrahman Mohamed, Omer Levy, Ves Stoyanov, and Luke Zettlemoyer. 2020. BART: Denoising Sequence-to-Sequence Pre-training for Natural Language Generation, Translation, and Comprehension. In ACL.
- GPT-2 - Alec Radford, Jeffrey Wu, Rewon Child, David Luan, Dario Amodei, and Ilya Sutskever. 2019. Language models are unsupervised multitask learners. OpenAI blog 1, 8 (2019), 9.
- ImageNet - Jia Deng et al. 2009. ImageNet: A Large-Scale Hierarchical Image Database. In IEEE Conference on Computer Vision and Pattern Recognition (CVPR).

- ExDark-Yuen Peng Loh and Chee Seng Chan. 2019. Getting to Know Low-Light Images with the Exclusively Dark Dataset. Computer Vision and Image Understanding 178 (2019), 30-42.
- DarkFace - Chen Wei, Wenjing Wang, Wenhan Yang, and Jiaying Liu. 2018. Deep Retinex Decomposition for Low-Light Enhancement. In British Machine Vision Conference (BMVC).
- COCO - Tsung-Yi Lin, Michael Maire, Serge Belongie, James Hays, Pietro Perona, Deva Ramanan, Piotr Dollár, and C Lawrence Zitnick. 2014. Microsoft COCO: Common Objects in Context. In European Conference on Computer Vision (ECCV). Springer, 740-755.
- GLUE - Alex Wang, Amanpreet Singh, Julian Michael, Felix Hill, Omer Levy, and Samuel R Bowman. 2018. GLUE: A Multi-Task Benchmark and Analysis Platform for Natural Language Understanding. Proceedings of the 2018 EMNLP Workshop BlackboxNLP: Analyzing and Interpreting Neural Networks for NLP (2018).
- SparseML - Mark Kurtz, Justin Kopinsky, Rati Gelashvili, Alexander Matveev, John Carr, Michael Goin, William Leiserson, Sage Moore, Nir Shavit, and Dan Alistarh. 2020. Inducing and Exploiting Activation Sparsity for Fast Inference on Deep Neural Networks. In International Conference on Machine Learning (ICML). 5533-5543.
- Eyeriss-V2 - Yu-Hsin Chen, Tien-Ju Yang, Joel Emer, and Vivienne Sze. 2019. Eyeriss v2: A Flexible Accelerator for Emerging Deep Neural Networks on Mobile Devices. IEEE Journal on Emerging and Selected Topics in Circuits and Systems (JETCAS) 9, 2 (2019), 292-308.
- PREMA - Yujeong Choi and Minsoo Rhu. 2020. PREMA: A Predictive Multi-task Scheduling Algorithm for Preemptible Neural Processing Units. In IEEE International Symposium on High Performance Computer Architecture (HPCA).
- Planaria - Soroush Ghodrati, Byung Hoon Ahn, Joon Kyung Kim, Sean Kinzer, Brahmendra Reddy Yatham, Navateja Alla, Hardik Sharma, Mohammad Alian, Eiman Ebrahimi, Nam Sung Kim, et al. 2020. Planaria: Dynamic Architecture Fission for Spatial Multi-Tenant Acceleration of Deep Neural Networks. In IEEE/ACM International Symposium on Microarchitecture (MICRO).
- SDRM3 - Seah Kim, Hyoukjun Kwon, Jinook Song, Jihyuck Jo, Yu-Hsin Chen, Liangzhen Lai, and Vikas Chandra. 2024. SDRM3: A Dynamic Scheduler for Dynamic Real-time Multi-model ML Workloads. In ACM International Conference on Architectural Support for Programming Languages and Operating Systems (ASPLOS).

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

**Claims**

1. A computer-implemented method for scheduling the execution of a plurality of machine learning, ML, model inference requests, the method comprising:

   receiving a new inference request in relation to one of a plurality of ML models, the new inference request comprising a maximum latency requirement;
   calculating a static score for the new inference request based on the maximum latency requirement, the static score indicating when the new inference request is to be scheduled;
   adding the new inference request into a queue of inference requests, wherein a position of the new inference request in the queue is based on the static score;
   determining whether a processing unit is currently executing an earlier inference request; and
   when the processing unit is determined to be executing an earlier inference request:

      calculating a dynamic score for the earlier inference request, based on a remaining execution time and a maximum latency requirement for the earlier inference request;
      calculating a dynamic score for the new inference request and each inference request in the queue; and
      scheduling execution of the earlier inference request, the new inference request and each inference request in the queue based on the dynamic scores.

2. The method as claimed in claim 1 wherein when execution of the new inference request or another inference request in the queue is scheduled sooner than the earlier inference request which is currently being executed, the method further comprises:

      pausing execution of the earlier inference request; and
      executing the new inference request or the another existing inference request in the queue.

3. The method as claimed in claim 1 or 2 wherein calculating a static score for the new inference request based on the maximum latency requirement comprises:
calculating a weighted sum of an estimated latency to complete the new inference request, and a slack time indicating a time remaining before the new inference request needs to be executed to satisfy the maximum latency requirement.

4. The method as claimed in claim 3 further comprising determining the estimated latency based on a sparsity pattern of the ML model that relates to the new inference request, where the sparsity pattern is a pattern of non-zero values in the ML model and is included in the received new inference request.

5. The method as claimed in claim 4 further comprising determining the slack time by subtracting the estimated latency from the maximum latency requirement.

6. The method as claimed in any of claims 3 to 5 wherein calculating a dynamic score for the earlier inference request, the new inference request and each inference request in the queue comprises:

   determining a remaining time to completion for the earlier inference request;
   updating, using the determined remaining time, the slack time for the new inference request and each inference request in the queue;
   calculating, for each inference request, a time penalty indicating whether it would be better to execute that inference request instead of another inference request; and
   calculating the dynamic score using the determined remaining time, calculated time penalty, and updated slack time.

7. The method as claimed in claim 6 wherein updating the slack time for the new inference request and each inference request in the queue comprises:
subtracting the determined remaining time from the maximum latency requirement for the new inference request and each inference request in the queue.

8. The method as claimed in claim 6 or 7 wherein calculating, for the earlier inference request, the new inference request and each inference request in the queue, a time penalty comprises:

   calculating a ratio between a waiting time and an isolated execution time, wherein the waiting time is a time that the inference request has been waiting to be executed, and the isolated execution time is a time for executing the inference request without interruption; and
normalising the ratio using a number of requests in the queue.

9. The method as claimed in claim 6, 7 or 8 wherein determining a remaining time to completion for the earlier inference request comprises:
calculating a sparsity-based latency for the earlier inference request using an average sparsity across layers of the ML model, and an average latency for the ML model.

10. The method as claimed in claim 9 wherein the average latency is predicted based on one or more characteristics of the ML model.

11. The method as claimed in claim 9 wherein the average latency is predicted based on historical data, obtained from previous executions of the ML model.

12. An apparatus for scheduling the execution of a plurality of machine learning, ML, model inference requests, the apparatus comprising:

   a processing unit for executing the plurality of ML inference requests;
   at least one processor coupled to memory, for:

      receiving a new inference request in relation to one of the plurality of ML models, the new inference request comprising a maximum latency requirement;
      calculating a static score for the new inference request based on the maximum latency requirement, the static score indicating when the new inference request is to be scheduled; and
      adding the new inference request into a queue of inference requests, wherein a position of the new inference request in the queue is based on the static score; and a scheduler comprising:

         a controller for:

            determining whether the processing unit is currently executing an earlier inference request; and
            when the processing unit is determined to be executing an earlier inference request:

               calculating a dynamic score for the earlier inference request, based on a remaining execution time and a maximum latency requirement for the earlier inference request;
calculating a dynamic score for the new inference request and each inference request in the queue; and
scheduling execution of the earlier inference request, the new inference request and each inference request in the queue based on the dynamic scores.

13. The apparatus as claimed in claim 12 wherein the scheduler further comprises:
a compute unit, coupled to the controller, comprising a plurality of configurable multiplexers and demultiplexers for:

performing a first task to calculate a dynamic score for the earlier inference request, the new inference request and each inference request in the queue; and
performing a second task to calculate a sparsity coefficient used to calculate a sparsity-based latency.

14. The apparatus as claimed in claim 13 wherein the compute unit is configured to configure the multiplexers and demultiplexers in response to instructions from the controller to perform the first task or second task.

15. The apparatus as claimed in claim 12, 13 or 14 further comprising a monitor, coupled to the controller, for:
monitoring layer sparsity when the processing unit executes inference requests for each ML model.

(a) Sparse multi-DNN workloads

(b) Sparsity Pattern

(c) Sparsity Dynamicity

FIGURE 1

FIGURE 2

FIGURE 3

FIGURE 4

(a) SJF scheduling without sparsity info   (b) SJF scheduling with sparsity info

FIGURE 5

(a) Random point-wise pattern    (b) N:M Block-wise pattern    (c) Channel-wise pattern

FIGURE 6

FIGURE 7

FIGURE 8

## Algorithm 1: Static Scheduler

Input: $Reqst_n = \langle Model_n, Pattn_n, input_n, SLO_n \rangle$

Output: $Score_n, Info_n$

if $Reqst_n$ arrives then ▷ New request arrives

$Info_n \leftarrow \text{LUT}(Reqst_n)$ ▷ Obtain model info from LUT

$Lat_n \leftarrow \text{PredLat}(Model_n, Pattn_n)$ ▷ Estimate latency w/ sparsity pattern

$T_n^{\text{Slack}} \leftarrow SLO_n - Lat_n$ ▷ Calculate slack time

$Score_n \leftarrow Lat_n + \beta \times T_n^{\text{Slack}}$ ▷ Calculate score

$\text{SendHW}(Score_n, Info_n)$ ▷ Forward score & info to dynamic scheduler

end

FIGURE 9

## Algorithm 2: Dynamic Scheduler

**1** **Input:** $Reqst_n = \langle Score_n, Info_n \rangle$      ▷ Input request from static scheduler

**2** **Output:** $Reqst_{next}$

**3** **if** $Reqst_n$ received **then**      ▷ Request received, parallel execute with line 6

**4**   |   Push($ReqstQ, Score_n, Info_n$)      ▷ Push request into queue

**5** **end**

**6** **if** LayerRun($Reqst_{cur}$) return at time $t$ **then**      ▷ Invoke scheduler

**7**   |   $\widehat{T}_{cur}^{Remain} \leftarrow$ PredSparseLat($S_{cur}^{Monitor}$)      ▷ Update remain time

**8**   |   **foreach** $Reqst_i$ **in** $ReqstQ$ **do**      ▷ Update per-request score

**9**   |   |   $T_i^{Slack} \leftarrow SLO_i - t - \widehat{T}_i^{Remain}$

**10**   |   |   $T_i^{Penalty} \leftarrow \left( T_i^{Wait} / T_i^{Isol.} \right) / |ReqstQ|$

**11**   |   |   $Score_i \leftarrow \widehat{T}_i^{Remain} + \eta \times ( T_i^{Slack} + T_i^{Penalty} )$

**12**   |   **end**

**13**   |   $Reqst_{next} \leftarrow \underset{i}{\arg\min} \; Score_i, \quad \forall i \in [1, |ReqstQ|]$      ▷ Select new request

**14** **end**

FIGURE 10

## Algorithm 3: Sparse Latency Prediction

**1** **Input:** $S^{Monitor}, i, j$      ▷ Monitored information from NPU

**2** **Output:** $Lat_i^{Sparse}$

**3** **if** $S^{Monitor}$ captured for $j$-th Layer of $Reqst_i$ **then**      ▷ Monitored layer sparsity

**4**   |   $S_{(i,j)}^{Avg} \leftarrow$ SparsityLUT($i, j$)      ▷ Get average sparsity

**5**   |   $Lat_i^{Avg} \leftarrow$ LatencyLUT($i$)      ▷ Get average latency

**6**   |   $\gamma_i \leftarrow$ PredSparsityCoeff($S^{Monitor}, S_{(i,j)}^{Avg}$)      ▷ Update sparsity coefficient

**7**   |   $Lat_i^{Sparse} \leftarrow \alpha \times \gamma_i \times Lat_i^{Avg}$      ▷ Predict latency

**8** **end**

FIGURE 11

(a) Correlation of Sparsity in BERT    (b) Correlation of Sparsity in GPT-2

FIGURE 12

FIGURE 13

(a) Dataflow of calculating sparsity coef.

(b) Dataflow of calculating score

(c) Engine connection for calculating sparsity coef.

(d) Engine connection of calculating score

FIGURE 14

Scheduling method

Receive a new inference request comprising a maximum latency requirement S100

See Algorithm 1 ← Calculate initial static score for new inference request based on maximum latency requirement S102

Add new inference request to queue S104

Is PU executing earlier inference request? S106

no

yes

See Algorithm 2 ← Calculate dynamic score for all requests S108

Schedule execution of request based on dynamic score S110

Execute first inference request in queue S112

FIGURE 15

Apparatus 200

Processing unit 202

Interface(s) 212

Processor(s) 204

Memory 206

Trained ML models 208

Hardware Scheduler 210

Compute Unit 214

Monitor 216

FIGURE 16

FIGURE 17

EP 4 455 873 A1

FIGURE 18

FIGURE 19

32

|  | Multi-AttNNs | | Multi-CNNs | |
|---|---|---|---|---|
|  | ANTT ↓ | Violation Rate [%] ↓ | ANTT ↓ | Violation Rate [%] ↓ |
| FCFS | 18.9 | 55.1 | 11.4 | 23.1 |
| SJF | 5.0 | 15.2 | 2.6 | 3.4 |
| SDRM | 18.9 | 63.3 | 9.3 | 33.7 |
| PREMA | 5.4 | 15.3 | 3.0 | 3.2 |
| Planaria | 16.0 | 6.8 | 4.2 | 2.1 |
| Dysta | 4.7 | 5.1 | 2.5 | 2.0 |

FIGURE 20

(a) Multi-AttNNs with 30 samples/s

(b) Multi-AttNNs with 40 samples/s

(c) Multi-CNNs with 3 samples/s

(d) Multi-CNNs with 4 samples/s

FIGURE 21

(a) Optimization breakdown in multi-AttNNs.

(b) Optimization breakdown in multi-CNNs.

FIGURE 22

(a) Multi-AttNNs with arrival rate of 30 samples/s.

(b) Multi-AttNNs with arrival rate of 40 samples/s.

(c) Multi-CNNs with arrival rate of 3 samples/s.

(d) Multi-CNNs with arrival rate of 4 samples/s.

FIGURE 23

(a) SLO violation rate, throughput and ANTT of multi-AttNNs.

(b) SLO violation rate, throughput and ANTT of multi-CNNs.

FIGURE 24

FIGURE 25

| Module | LUTs | DSPs | On-Chip RAM |
|---|---|---|---|
| Eyeriss-V2 | 99168 | 194 | 140 KB |
| Scheduler | 553 | 3 | 0.5 KB |
| *Dysta*-Eyeriss-V2 | 99721 | 196 | 140.5 KB |
| Total Overhead | 0.55% | 1.5% | 0.35% |

FIGURE 26

## EUROPEAN SEARCH REPORT

Application Number

EP 23 20 8382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEAH KIM ET AL: "SDRM3: A Dynamic Scheduler for Dynamic Real-time Multi-model ML Workloads", ARXIV.ORG, CORNELL UNIVERSITY LIBRARY, 201 OLIN LIBRARY CORNELL UNIVERSITY ITHACA, NY 14853, 7 December 2022 (2022-12-07), XP091388669, | 1,2, 12-15 | INV. G06F9/48 |
| A | * the whole document * | 3-11 | |

TECHNICAL FIELDS SEARCHED (IPC)

G06F
G06N

The present search report has been drawn up for all claims

| Place of search | Date of completion of the search | Examiner |
|---|---|---|
| The Hague | 28 April 2024 | Alecu, Mihail |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JACOB DEVLIN ; MING-WEI CHANG ; KENTON LEE ; KRISTINA TOUTANOVA.** BERT: Pre-training of Deep Bidirectional Transformers for Language Understanding. *ACL,* 2019
- **LIQIANG LU ; YICHENG JIN ; HANGRUI BI ; ZIZHANG LUO ; PENG LI ; TAO WANG ; YUN LIANG.** Sanger: A Co-Design Framework for Enabling Sparse Attention Using Reconfigurable Architecture. *54th Annual IEEE/ACM International Symposium on Microarchitecture (MICRO),* 2021
- **PRANAV RAJPURKAR ; JIAN ZHANG ; KONSTANTIN LOPYREV ; PERCY LIANG.** SQuAD: 100,000+ Questions for Machine Comprehension of Text. *Conference on Empirical Methods in Natural Language Processing (EMNLP),* 2016, 2383-2392
- **KAIMING HE ; XIANGYU ZHANG ; SHAOQING REN ; JIAN SUN.** Deep Residual Learning for Image Recognition. *IEEE Conference on Computer Vision and Pattern Recognition (CVPR),* 2016
- **KAREN SIMONYAN ; ANDREW ZISSERMAN.** Very Deep Convolutional Networks for Large-Scale Image Recognition. *In International Conference on Learning Representations (ICLR),* 2015
- **ANDREW G HOWARD ; MENGLONG ZHU ; BO CHEN ; DMITRY KALENICHENKO ; WEIJUN WANG ; TOBIAS WEYAND ; MARCO ANDREETTO ; HARTWIG ADAM.** MobileNets: Efficient Convolutional Neural Networks for Mobile Vision Applications. *arXiv,* 2017
- **MIKE LEWIS ; YINHAN LIU ; NAMAN GOYAL ; MARJAN GHAZVININEJAD ; ABDELRAHMAN MOHAMED ; OMER LEVY ; VES STOYANOV ; LUKE ZETTLEMOYER.** BART: Denoising Sequence-to-Sequence Pre-training for Natural Language Generation, Translation, and Comprehension. *ACL,* 2020
- **ALEC RADFORD ; JEFFREY WU ; REWON CHILD ; DAVID LUAN ; DARIO AMODEI ; ILYA SUTSKEVER.** Language models are unsupervised multitask learners. *OpenAI blog,* 2019, vol. 1 (8), 9
- **JIA DENG et al.** ImageNet: A Large-Scale Hierarchical Image Database. *IEEE Conference on Computer Vision and Pattern Recognition (CVPR),* 2009
- **YUEN PENG LOH ; CHEE SENG CHAN.** Getting to Know Low-Light Images with the Exclusively Dark Dataset. *Computer Vision and Image Understanding,* 2019, vol. 178, 30-42
- **CHEN WEI ; WENJING WANG ; WENHAN YANG ; JIAYING LIU.** Deep Retinex Decomposition for Low-Light Enhancement. *British Machine Vision Conference (BMVC),* 2018
- Microsoft COCO: Common Objects in Context. **TSUNG-YI LIN ; MICHAEL MAIRE ; SERGE BELONGIE ; JAMES HAYS ; PIETRO PERONA ; DEVA RAMANAN ; PIOTR DOLLÁR ; C LAWRENCE ZITNICK.** European Conference on Computer Vision (ECCV). Springer, 2014, 740-755
- **ALEX WANG ; AMANPREET SINGH ; JULIAN MICHAEL ; FELIX HILL ; OMER LEVY ; SAMUEL R BOWMAN.** GLUE: A Multi-Task Benchmark and Analysis Platform for Natural Language Understanding. *Proceedings of the 2018 EMNLP Workshop BlackboxNLP: Analyzing and Interpreting Neural Networks for NLP,* 2018
- **MARK KURTZ ; JUSTIN KOPINSKY ; RATI GELASHVILI ; ALEXANDER MATVEEV ; JOHN CARR ; MICHAEL GOIN ; WILLIAM LEISERSON ; SAGE MOORE ; NIR SHAVIT ; DAN ALISTARH.** Inducing and Exploiting Activation Sparsity for Fast Inference on Deep Neural Networks. *International Conference on Machine Learning (ICML),* 2020, 5533-5543
- **YU-HSIN CHEN ; TIEN-JU YANG ; JOEL EMER ; VIVIENNE SZE.** Eyeriss v2: A Flexible Accelerator for Emerging Deep Neural Networks on Mobile Devices. *IEEE Journal on Emerging and Selected Topics in Circuits and Systems (JETCAS),* 2019, vol. 9 (2), 292-308
- **YUJEONG CHOI ; MINSOO RHU.** PREMA: A Predictive Multi-task Scheduling Algorithm for Preemptible Neural Processing Units. *IEEE International Symposium on High Performance Computer Architecture (HPCA),* 2020
- **SOROUSH GHODRATI ; BYUNG HOON AHN ; JOON KYUNG KIM ; SEAN KINZER ; BRAHMENDRA REDDY YATHAM ; NAVATEJA ALLA ; HARDIK SHARMA ; MOHAMMAD ALIAN ; EIMAN EBRAHIMI ; NAM SUNG KIM et al.** Planaria: Dynamic Architecture Fission for Spatial Multi-Tenant Acceleration of Deep Neural Networks. *In IEEE/ACM International Symposium on Microarchitecture (MICRO),* 2020

- **SEAH KIM ; HYOUKJUN KWON ; JINOOK SONG ; JIHYUCK JO ; YU-HSIN CHEN ; LIANGZHEN LAI ; VIKAS CHANDRA.** SDRM3: A Dynamic Scheduler for Dynamic Real-time Multi-model ML Workloads. *ACM International Conference on Architectural Support for Programming Languages and Operating Systems (ASPLOS),* 2024